(19) Europäisches Patentamt
European Patent Office
Office européen des brevets

(11) EP 3 363 068 B1

(12) EUROPEAN PATENT SPECIFICATION

(45) Date of publication and mention of the grant of the patent:
**12.01.2022 Bulletin 2022/02**

(21) Application number: **16784756.5**

(22) Date of filing: **14.10.2016**

(51) Int Cl.:
***H01M 10/613*** (2014.01) ***H01M 10/625*** (2014.01)
***H01M 10/6556*** (2014.01) ***H01M 10/653*** (2014.01)

(86) International application number:
**PCT/US2016/057080**

(87) International publication number:
**WO 2017/066596 (20.04.2017 Gazette 2017/16)**

(54) **PHOSPHAZENE MODIFIED POLYCARBONATE MOLDED BATTERY COOLING DEVICE**

PHOSPHAZEN-POLYKARBONAT ENHALTENDER KUEHLER FUER BATTERIEN.

REFROIDISSEUR DE BATTERIES A BASE DE POLYCARBONATE MODIFIE AU PHOSPHAZENE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2015 PCT/US2015/055516**

(43) Date of publication of application:
**22.08.2018 Bulletin 2018/34**

(73) Proprietor: **Covestro LLC**
**Pittsburgh, PA 15205 (US)**

(72) Inventors:
- **OSIO, Ignacio**
  **Gibsonia, Pennsylvania 15044 (US)**
- **DAVIS, Terry G.**
  **Kimball, Michigan 48074 (US)**

(74) Representative: **Levpat**
**c/o Covestro AG**
**Gebäude 4825**
**51365 Leverkusen (DE)**

(56) References cited:
**EP-A1- 1 030 387** **EP-A1- 1 030 388**
**WO-A1-2013/037742** **WO-A1-2014/086800**
**US-A1- 2004 069 620** **US-B2- 8 562 873**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## FIELD OF THE INVENTION

The present invention relates in general to a device and materials for cooling one or more battery cells, wherein a cooling fluid may be used on one side of a cooling channel of the device, which separates the batteries from the cooling fluid and supports the battery cells to remain in a particular position during the anticipated movement of an automobile or other vehicle.

## BACKGROUND OF THE INVENTION

Currently, battery systems for electrified vehicles (EV) are monolithic structures, enclosed in metal or composites casings housing internal sub-modules, thermal management, electronics, sensors and a battery management system. Such a complex configuration is vehicle-platform specific, heavy, and difficult to design, assemble and integrate into the vehicle. The reliability of such battery packs is evaluated at a system level, which makes the qualification process time-consuming and expensive. These large battery systems are also difficult to repair, service or re-purpose after the automotive life cycle in complete. In addition, safety risks regarding the flammability and thermal runaway are handled via electronic controls and overall containment provided by the outer enclosure.

In contrast, newer battery systems may be made up of one or more modules comprised of a number of cells. Rather than making battery systems vehicle-specific, they would be comprised of smaller, standardized size battery modules. The number of modules per system would vary according to the power needs of the vehicle. Having a modular construction improves the reliability of energy storage system. If one battery cell should fail, a user may not experience any reduction in power or vehicle downtime, and depending on the module construction, the defective module or battery cell may be replaced upon regular servicing.

However, a need exists to both support and cool these modules during the normal movement of an automobile as well as to cushion the battery cells in the event of a collision. While cushioning plastic parts have been used in automobiles for years, such parts are typically not designed to abut both cooling fluid and battery cells, or designed to provide a thermal pathway to drain heat from the battery cells. Meanwhile, cooling channels have historically been made out of metal, used for its high strength and thermal conductivity. However, metal is electrically conductive, requiring the use of insulators to prevent the creation of a short circuit. Furthermore, metal parts can be difficult to manufacture, often requiring a cooling channel to be made up of multiple metal parts welded together. Finally, metal components and structures can also be heavy in relation to other materials used in motor vehicles, which can decrease the vehicles' performance. Thus, a need exists to have structures and devices that can effectively support battery cells, while still being able to effectively transfer heat from batteries to the cooling fluid, for smaller batteries that may be part of a module.

EP 1030387 AND EP 1030 388 disclose cooling modulanr device made out of molded prolycarbonate resin parts.

## SUMMARY OF THE INVENTION

The essential technical features of the present invention are explicitly disclosed in the wording of independent device claim 1 and respectively in the wording of independent battery cooling management device claim 10 presently on file. Further features thereof are explicitly defined in the wordings of dependent device claims 1-9 presently on file. In one embodiment of the invention, a device for cooling battery cells comprises a plastic cooling channel that has an inner surface and an outer surface. The plastic cooling channel comprises a polycarbonate, and a phosphazene additive and is configured for a fluid to contact the inner surface, and to prevent the cooling fluid from contacting the outer surface. The outer surface of the plastic cooling channel is configured to structurally support the battery cells.

In another embodiment of the invention, a device for cooling battery cells comprises a support frame and a plastic cooling channel. The plastic cooling channel has an inner surface and an outer surface. The plastic cooling channel comprises a polycarbonate, and is configured for a fluid to contact the inner surface, and to prevent the cooling fluid from contacting the outer surface.

In yet another embodiment of the invention, a device for cooling battery cells comprises a plastic cooling channel that has an inner surface and an outer surface, and a thermally conductive material. The plastic cooling channel comprises a polycarbonate, and a phosphazene additive and is configured for a fluid to contact the inner surface. The thermally conductive material is in contact with the cooling fluid.

In still another embodiment, the plastic cooling channel of any of the above embodiments may be comprised of a first cooling channel part and a second cooling channel part, which may be fixedly attached to each other through the use of a silicone sealant. In this embodiment, grooves may optionally be used to direct liquid injection molded silicone.

In a different embodiment of the invention, the plastic cooling channel of any of the above embodiments may be substantially electrically nonconductive and thermally conductive.

In another embodiment, the plastic cooling channel of any of the above embodiments may be constructed by injection molding or blow molding, and must further comprise a phosphazene additive.
In yet another embodiment, the inner surface of the plastic cooling channel of any of the above embodiments may be substantially free of metal.
In still another embodiment, the plastic cooling channel of any of the above embodiments may further comprise structures for impact resistance.
In a different embodiment not yet mentioned, the outer surface of the plastic cooling channel of any of the above embodiments is in contact with one or more battery cells, and may further not be in contact with a metal cooling plate.
In another embodiment from the above, the device of any of the above embodiments may further comprise a thermal interface material applied to the outer wall of the cooling channel.
In another embodiment, the device of any of the above embodiments is constructed of a modular design for attachment to another plastic molded device for cooling battery cells.
In still another embodiment, the device of any of the above embodiments further comprises one or more control valves to adjust or divert the flow of cooling fluid to increase the thermal management efficiency of the battery cells.
In yet another embodiment of the invention, a battery cooling management system comprises a plastic molded device of any of the preceding embodiments.
These and other advantages and benefits of the present invention will be apparent from the Detailed Description of the Invention herein below.

## BRIEF DESCRIPTION OF THE FIGURES

The present invention will now be described for purposes of illustration and not limitation in conjunction with the figures, wherein:

FIG. 1 is a perspective view of one embodiment of a plastic molded device of the present invention;

FIG. 2 is a perspective view of another embodiment of a plastic molded device of the present invention;

FIG. 3 shows a cooling channel part of the embodiment of FIG. 3, where the cooling channel, a port, and several battery cells are visible;

FIG. 4 is an exploded view of another plastic molded device of the present invention, showing two cooling channel parts;

FIG. 5 is a rear view of the embodiment of FIG. 3, showing a ports for cooling fluid inlet and outlet;

FIG. 6 shows a cooling channel part of the embodiment of FIG. 3;

FIG. 7 shows a cooling channel part of the embodiment of FIG. 3, where the cooling channel, a port, and several battery cells are visible;

FIG. 8 depicts another embodiment of the present invention showing two plastic molded devices of the present invention, in a modular design;

FIG. 9 shows another embodiment of the present invention, with a pouch-type battery cell enclosed therein, and an array of battery cells fitted together;

FIG. 10 shows the plastic cooling channel and the thermally conductive material of the embodiment of FIG. 9;

FIG. 11 shows another device of the present invention, created by a blow-molding process;

FIG. 12 is an exploded view of one part of an array of battery cooling cells of the embodiment shown in FIG. 9; and

FIG. 13 shows multiple devices of the present invention connected together in arrays, with details for connections to additional devices or arrays, structural parts, electricity output and cooling fluid inputs and outputs.

## DETAILED DESCRIPTION OF THE INVENTION

The present invention provides a device for cooling one or more battery cells, wherein a cooling fluid may be used on the inner surface of a cooling channel of the device, thus preventing the cooling fluid from contacting the battery cells. As described herein, various embodiments of the present invention include configuring the outer surface of the cooling channel to structurally support the battery cells, including a support frame, and a thermally conductive material disposed in between the cooling fluid and the battery cells. In addition, the composition of one material that may be used in an embodiment of the invention is described below.

I. Materials of Construction

In one embodiment of the present invention, the cooling channel may be comprised of :

A) from 60 to 95 parts by weight, preferably from 65 to 90 parts by weight, more preferably from 70 to 85 parts by weight, particularly preferably from 76 to 88 parts by weight, of aromatic polycarbonate and/or aromatic polyester carbonate,

B) from 1.0 to 15.0 parts by weight, preferably from 3.0 to 12.5 parts by weight, particularly preferably from 4.0 to 10.0 parts by weight, of rubber-modified graft polymer,

C) from 1.0 to 20.0 parts by weight, preferably from 1.0 to 15.0 parts by weight, more preferably from 1.0 to 12.5 parts by weight, particularly preferably from 1.5 to 10.0 parts by weight, of at least one cyclic phosphazene of structure (X)

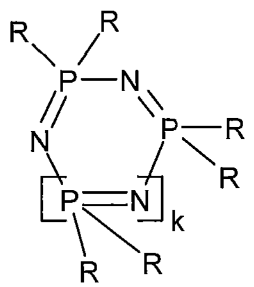

(X),

wherein

k represents 1 or an integer from 1 to 10, preferably a number from 1 to 8, particularly preferably from 1 to 5,

having a trimer content (k=1) of from 60 to 98 mol%, more preferably from 65 to 95 mol%, particularly preferably from 65 to 90 mol% and most particularly preferably from 65 to 85 mol%, in particular from 70 to 85 mol%, based on component C,
and wherein

R is in each case identical or different and represents an amine radical; C1- to C8-alkyl, preferably methyl, ethyl, propyl or butyl, each optionally halogenated, preferably halogenated with fluorine; C1- to C8-alkoxy, preferably methoxy, ethoxy, propoxy or butoxy; C5- to C6-cycloalkyl each optionally substituted by alkyl, preferably C1-C4-alkyl, and/or by halogen, preferably chlorine and/or bromine; C6- to C20-aryloxy, preferably phenoxy, naphthyloxy, each optionally substituted by alkyl, preferably C1-C4-alkyl, and/or by halogen, preferably chlorine, bromine, and/or by hydroxy; C7- to C12-aralkyl, preferably phenyl-Cl C4-alkyl, each optionally substituted by alkyl, preferably C1-C4-alkyl, and/or by halogen, preferably chlorine and/or bromine; or a halogen radical, preferably chlorine; or an OH radical,

D) from 0 to 15.0 parts by weight, preferably from 2.0 to 12.5 parts by weight, more preferably from 3.0 to 9.0 parts by weight, particularly preferably from 3.0 to 6.0 parts by weight, of rubber-free vinyl (co)polymer or polyalkylene terephthalate,

E) from 0 to 15.0 parts by weight, preferably from 0.05 to 15.00 parts by weight, more preferably from 0.2 to 10.0

parts by weight, particularly preferably from 0.4 to 5.0 parts by weight, of additives,

F) from 0.05 to 5.0 parts by weight, preferably from 0.1 to 2.0 parts by weight, particularly preferably from 0.1 to 1.0 part by weight, of anti-dripping agents,

wherein all parts by weight are preferably so normalised in the present application that the sum of the parts by weight of all the components A+B+C+D+E+F in the composition is 100.

In one aspect of the present invention the described composition of A) to F) in all its combinations of preferred embodiments is used for preparing a cooling channel of a device for cooling battery cells according to the present invention.

Component A

Aromatic polycarbonates and/or aromatic polyester carbonates according to component A that are suitable are known in the literature or can be prepared by processes known in the literature (for the preparation of aromatic polycarbonates see, for example, Schnell, "Chemistry and Physics of Polycarbonates", Interscience Publishers, 1964 and DE-AS 1 495 626, DE-A 2 232 877, DE-A 2 703 376, DE-A 2 714 544, DE-A 3 000 610, DE-A 3 832 396; for the preparation of aromatic polyester carbonates see e.g. DE-A 3 007 934).

The preparation of aromatic polycarbonates is carried out, for example, by reaction of diphenols with carbonic acid halides, preferably phosgene, and/or with aromatic dicarboxylic acid dihalides, preferably benzenedicarboxylic acid dihalides, according to the interfacial process, optionally using chain terminators, for example monophenols, and optionally using branching agents having a functionality of three or more than three, for example triphenols or tetraphenols. Preparation by a melt polymerization process by reaction of diphenols with, for example, diphenyl carbonate is also possible.

Diphenols for the preparation of the aromatic polycarbonates and/or aromatic polyester carbonates are preferably those of formula (I)

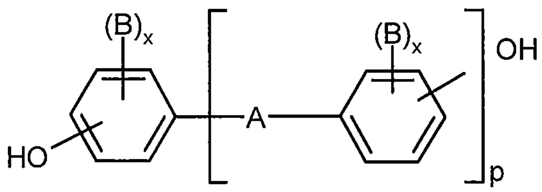

(I),

wherein

A is a single bond, C1- to C5-alkylene, C2- to C5-alkylidene, C5- to C6-cyclo-alkylidene, O , SO-, -CO-, -S-, -SO2-, C6- to C12-arylene, to which further aromatic rings optionally containing heteroatoms can be fused, or a radical of formula (II) or (III)

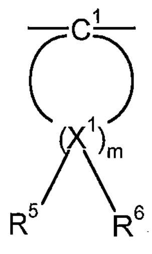

(II)

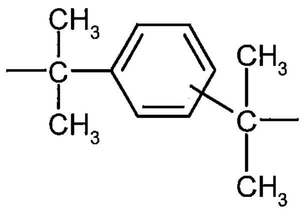

(III)

B is in each case C1- to C12-alkyl, preferably methyl, halogen, preferably chlorine and/or bromine,

x each independently of the other is 0, 1 or 2,

p is 1 or 0, and

R5 and R6 can be chosen individually for each X1 and each independently of the other is hydrogen or C1- to C6-alkyl, preferably hydrogen, methyl or ethyl,

X1 is carbon and

m is an integer from 4 to 7, preferably 4 or 5, with the proviso that on at least one atom XI, R5 and R6 are simultaneously alkyl.

Preferred diphenols are hydroquinone, resorcinol, dihydroxydiphenols, bis-(hydroxyphenyl)-$C_1$-$C_5$-alkanes, bis-(hydroxyphenyl)-$C_5$-$C_6$-cycloalkanes, bis-(hydroxyphenyl) ethers, bis-(hydroxy¬phenyl) sulfoxides, bis-(hydroxyphenyl) ketones, bis-(hydroxyphenyl)-sulfones and $\alpha,\alpha$-bis-(hydroxy¬phenyl)-diisopropyl-benzenes, and derivatives thereof brominated and/or chlorinated on the ring.

Particularly preferred diphenols are 4,4'-dihydroxydiphenyl, bisphenol A, 2,4-bis(4-hydroxy-phenyl)-2-methylbutane, 1,1-bis-(4-hydroxyphenyl)-cyclohexane, 1,1-bis-(4-hydroxy-phenyl)-3,3,5-trimethylcyclohexane, 4,4'-dihydroxydiphenyl sulfide, 4,4'-dihydroxydiphenylsulfone and di- and tetrabrominated or chlorinated derivatives thereof, such as, for example, 2,2-bis(3-chloro-4-hydroxy¬phenyl)-propane, 2,2-bis-(3,5-dichloro-4-hydroxyphenyl)-propane or 2,2-bis-(3,5-dibromo-4-hydroxy¬phenyl)-propane. 2,2-Bis-(4-hydroxyphenyl)-propane (bisphenol A) is particularly preferred.

The diphenols can be used on their own or in the form of arbitrary mixtures. The diphenols are known in the literature or are obtainable according to processes known in the literature.

Chain terminators suitable for the preparation of thermoplastic aromatic polycarbonates are, for example, phenol, p-chlorophenol, p-tert-butylphenol or 2,4,6-tribromophenol, but also long-chained alkylphenols, such as 4-[2-(2,4,4-trimethylpentyl)]-phenol, 4-(1,3-tetramethyl-butyl)-phenol according to DE-A 2 842 005 or monoalkylphenol or dialkylphenols having a total of from 8 to 20 carbon atoms in the alkyl substituents, such as 3,5-di-tert-butyl¬phenol, p-isooctylphenol, p-tert-octylphenol, p-dodecy¬phenol and 2-(3,5-dimethyl¬heptyl)-phenol and 4-(3,5-dimethylheptyl)-phenol. The amount of chain terminators to be used is generally from 0.5 mol% to 10 mol%, based on the molar sum of the diphenols used in a particular case.

The thermoplastic aromatic polycarbonates have mean molecular weights (weight-average $M_w$, measured by GPC (gel permeation chromatography) with polycarbonate standard) of from 15,000 to 80,000 g/mol, preferably from 19,000 to 32,000 g/mol, particularly preferably from 22,000 to 30,000 g/mol.

The thermoplastic aromatic polycarbonates can be branched in a known manner, preferably by the incorporation of from 0.05 to 2.0 mol %, based on the sum of the diphenols used, of compounds having a functionality of three or more than three, for example those having three or more phenolic groups. Preference is given to the use of linear polycarbonates, more preferably based on bisphenol A.

Both homopolycarbonates and copolycarbonates are suitable. For the preparation of copolycarbonates of component A it is also possible to use from 1 to 25 wt. %, preferably from 2.5 to 25 wt. %, based on the total amount of diphenols to be used, of polydiorganosiloxanes having hydroxyaryloxy end groups. These are known (US 3 419 634) and can be prepared according to processes known in the literature. Also suitable are copolycarbonates containing polydiorganosiloxanes; the preparation of copolycarbonates containing polydiorganosiloxanes is described, for example, in DE-A 3 334 782.

Aromatic dicarboxylic acid dihalides for the preparation of aromatic polyester carbonates are preferably the diacid dichlorides of isophthalic acid, terephthalic acid, diphenyl ether 4,4'-dicarboxylic acid and naphthalene-2,6-dicarboxylic acid.

Mixtures of the diacid dichlorides of isophthalic acid and terephthalic acid in a ratio of from 1:20 to 20:1 are particularly preferred.

In the preparation of polyester carbonates, a carbonic acid halide, preferably phosgene, is additionally used concomitantly as bifunctional acid derivative.

Suitable chain terminators for the preparation of the aromatic polyester carbonates, in addition to the monophenols already mentioned, are also the chlorocarbonic acid esters thereof and the acid chlorides of aromatic monocarboxylic acids, which can optionally be substituted by $C_1$- to $C_{22}$-alkyl groups or by halogen atoms, as well as aliphatic $C_2$- to $C_{22}$-monocarboxylic acid chlorides.

The amount of chain terminators is in each case from 0.1 to 10 mol %, based in the case of phenolic chain terminators on mol of diphenol and in the case of monocarboxylic acid chloride chain terminators on mol of dicarboxylic acid dichloride.

One or more aromatic hydroxycarboxylic acids can additionally be used in the preparation of aromatic polyester carbonates.

The aromatic polyester carbonates can be both linear and branched in known manner (see in this connection DE-A 2 940 024 and DE-A 3 007 934), linear polyester carbonates being preferred.

There can be used as branching agents, for example, carboxylic acid chlorides having a functionality of three or more, such as trimesic acid trichloride, cyanuric acid trichloride, 3,3' 4,4'-benzophe¬none-tetracarboxylic acid tetrachloride, 1,4,5,8-naphthalene-tetracarboxylic acid tetrachloride or pyromellitic acid tetrachloride, in amounts of from 0.01 to 1.0 mol% (based on dicarboxylic acid dichlorides used), or phenols having a functionality of three or more, such as phloroglucinol, 4,6-dimethyl-2,4,6-tri-(4-hydroxyphenyl)-hept-2-ene, 4,6-dimethyl-2,4,6-tri-(4-hydroxyphenyl)-heptane, 1,3,5-tri-(4-hydroxyphenyl)-benzene, 1,1,1-tri-(4-hydroxy¬phenyl)-ethane, tri-(4-hydroxyphenyl)-phenylmethane, 2,2-bis[4,4-bis(4-hydroxy-phenyl)-cyclo¬hexyl]-propane, 2,4-bis(4-hydroxyphenyl-isopropyl)-phenol, tetra-(4-hydroxy¬phenyl)-methane, 2,6-bis(2-hydroxy-5-methyl-benzyl)-4-methyl-phenol, 2-(4-hydroxyphenyl)-2-(2,4-dihydroxyphenyl)-propane, tetra-(4-[4-hydroxy¬phenyl-isopropyl] -phenoxy)-methane, 1,4-bis[4,4'-dihydroxy¬triphenyl)-methyl]-benzene, in amounts of from 0.01 to 1.0 mol %, based on diphenols used. Phenolic branching agents can be placed in a vessel with the diphenols; acid chloride branching agents can be introduced together with the acid dichlorides.

The content of carbonate structural units in the thermoplastic aromatic polyester carbonates can vary as desired. The content of carbonate groups is preferably up to 100 mol %, in particular up to 80 mol %, particularly preferably up to 50 mol %, based on the sum of ester groups and carbonate groups. Both the esters and the carbonates contained in the aromatic polyester carbonates can be present in the polycondensation product in the form of blocks or distributed randomly.

The thermoplastic aromatic polycarbonates and polyester carbonates can be used on their own or in an arbitrary mixture.

Component B

The graft polymers in component B comprise, for example, graft polymers with rubber-elastic properties, which are obtainable substantially from at least 2 of the following monomers: chloroprene, 1,3-butadiene, isoprene, styrene, acrylonitrile, ethylene, propylene, vinyl acetate and (meth)acrylic acid esters having from 1 to 18 carbon atoms in the alcohol component; that is to say, polymers as are described, for example, in "Methoden der Organischen Chemie" (Houben-Weyl), Vol. 14/1, Georg Thieme-Verlag, Stuttgart 1961, p. 393-406 and in C.B. Bucknall, "Toughened Plastics", Appl. Science Publishers, London 1977.

In one embodiment, polymers in component B are, for example, ABS polymers (emulsion, mass and suspension ABS), as are described, for example, in DE-OS 2 035 390 (= US-PS 3 644 574) or in DE-OS 2 248 242 (= GB-PS 1 409 275) or in Ullmanns, Enzyklopädie der Technischen Chemie, Vol. 19 (1980), p. 280 ff.

The graft copolymers B are produced by radical polymerization, for example by emulsion, suspension, solution or mass polymerization, preferably by emulsion or mass polymerization.

In this embodiment, preferred polymers B are partially crosslinked and have gel contents (measured in toluene) of over 20 wt.%, preferably over 40 wt.%, in particular over 60 wt.%.

The gel content is determined at 25°C in a suitable solvent (M. Hoffmann, H. Krömer, R. Kuhn, Polymeranalytik I und II, Georg Thieme-Verlag, Stuttgart 1977).

In this embodiment, preferred graft polymers B include graft polymers of:

B.1) from 5 to 95 parts by weight, preferably from 30 to 80 parts by weight, of a mixture of

B.1.1) from 50 to 95 parts by weight of styrene, $\alpha$-methylstyrene, styrene substituted on the ring by methyl, $C_1$-$C_8$-alkyl methacrylate, in particular methyl methacrylate, $C_1$-$C_8$-alkyl acrylate, in particular methyl acrylate, or mixtures of these compounds, and

B.1.2) from 5 to 50 parts by weight of acrylonitrile, methacrylonitrile, $C_1$-$C_8$-alkyl methacrylates, in particular methyl methacrylate, $C_1$-$C_8$-alkyl acrylate, in particular methyl acrylate, maleic anhydride, $C_1$-$C_4$-alkyl- or - phenyl-N-substituted maleimides or mixtures of these compounds on

B.2) from 5 to 95 parts by weight, preferably from 20 to 70 parts by weight, of a rubber-containing graft base.

The graft base preferably has a glass transition temperature below -10°C.

Unless indicated otherwise in the present invention, glass transition temperatures are determined by means of differential scanning calorimetry (DSC) according to standard DIN EN 61006 at a heating rate of 10 K/min with definition of the Tg as the mid-point temperature (tangent method) and nitrogen as protecting gas.

Particular preference is given to a graft base based on a polybutadiene rubber.

In this embodiment, preferred graft polymers B are, for example, polybutadienes, butadiene/styrene copolymers and acrylate rubbers grafted with styrene and/or acrylonitrile and/or (meth)acrylic acid alkyl esters; that is to say, copolymers of the type described in DE-OS 1 694 173 (= US-PS 3 564 077); polybutadienes, butadiene/styrene or butadiene/acrylonitrile copolymers, polyisobutenes or polyisoprenes grafted with acrylic or methacrylic acid alkyl esters, vinyl acetate, acrylonitrile, styrene and/or alkylstyrenes, as are described, for example, in DE-OS 2 348 377 (= US-PS 3 919 353).

Particularly preferred graft polymers B are graft polymers obtainable by graft reaction of

I. from 10 to 70 wt. %, preferably from 15 to 50 wt. %, in particular from 20 to 40 wt. %, based on graft product, of at least one (meth)acrylic acid ester or from 10 to 70 wt. %, preferably from 15 to 50 wt. %, in particular from 20 to 40 wt. %, of a mixture of from 10 to 50 wt. %, preferably from 20 to 35 wt. %, based on the mixture, of acrylonitrile or (meth)acrylic acid ester and from 50 to 90 wt. %, preferably from 65 to 80 wt. %, based on the mixture, of styrene on

II. from 30 to 90 wt. %, preferably from 40 to 85 wt. %, in particular from 50 to 80 wt. %, based on graft product, of a butadiene polymer having at least 50 wt. %, based on II, butadiene radicals as graft base.

In this embodiment, most particular preference is given to the use of ABS (acrylonitrile-butadiene-styrene) as the graft polymer.

The gel content of this graft base II is preferably at least 70 wt. % (measured in toluene), the degree of grafting G is from 0.15 to 0.55 and the mean particle diameter $d_{50}$ of the graft polymer B is from 0.05 to 2 $\mu$m, preferably from 0.1 to 0.6 $\mu$m.

(Meth)acrylic acid esters I are esters of acrylic acid or methacrylic acid and monohydric alcohols having from 1 to 18 carbon atoms. Methacrylic acid methyl esters, ethyl esters and propyl esters are particularly preferred.

As well as comprising butadiene radicals, the graft base II can comprise up to 50 wt. %, based on II, of radicals of other ethylenically unsaturated monomers, such as styrene, acrylonitrile, esters of acrylic or methacrylic acid having from 1 to 4 carbon atoms in the alcohol component (such as methyl acrylate, ethyl acrylate, methyl methacrylate, ethyl methacrylate), vinyl esters and/or vinyl ethers. The preferred graft base II consists of pure polybutadiene.

Because, as is known, the graft monomers are not necessarily grafted completely onto the graft base during the graft reaction, graft polymers B are also understood according to the invention as being those products that are obtained by polymerization of the graft monomers in the presence of the graft base.

The degree of grafting G denotes the weight ratio of grafted graft monomers to the graft base and is dimensionless.

The mean particle size $d_{50}$ is the diameter above and below which in each case 50 wt. % of the particles lie. It can be determined by means of ultracentrifuge measurements (W. Scholtan, H. Lange, Kolloid, Z. und Z. Polymere 250 (1972), 782-796).

Further preferred graft polymers B of this embodiment are, for example, also graft polymers of

(a) from 20 to 90 wt. %, based on B, of acrylate rubber as graft base and

(b) from 10 to 80 wt. %, based on B, of at least one polymerisable, ethylenically unsaturated monomer, the homo- or co-polymers of which, formed in the absence of a), would have a glass transition temperature above 25°C, as graft monomers.

The graft base of acrylate rubber preferably has a glass transition temperature of less than -20°C, preferably less than -30°C.

The acrylate rubbers (a) of the polymers B are preferably polymers of acrylic acid alkyl esters, optionally with up to 40 wt. %, based on (a), of other polymerizable, ethylenically unsaturated monomers. The preferred polymerizable acrylic acid esters include $C_1$-$C_8$ alkyl esters, for example methyl, ethyl, n-butyl, n octyl and 2 ethylhexyl ester, and mixtures of these monomers.

For crosslinking, monomers with more than one polymerizable double bond can be copolymerized. Preferred examples of crosslinking monomers are esters of unsaturated monocarboxylic acids having from 3 to 8 carbon atoms

and unsaturated monohydric alcohols having from 3 to 12 carbon atoms, or saturated polyols having from 2 to 4 OH groups and from 2 to 20 carbon atoms, such as, for example, ethylene glycol dimethacrylate, allyl methacrylate; polyunsaturated heterocyclic compounds, such as, for example, trivinyl and triallyl cyanurate; polyfunctional vinyl compounds, such as di- and tri-vinylbenzenes; but also triallyl phosphate and diallyl phthalate.

Preferred crosslinking monomers are allyl methacrylate, ethylene glycol dimethacrylate, diallyl phthalate and heterocyclic compounds which contain at least 3 ethylenically unsaturated groups.

Particularly preferred crosslinking monomers are the cyclic monomers triallyl cyanurate, triallyl isocyanurate, trivinyl cyanurate, triacryloylhexahydro-s-triazine, triallylbenzenes.

The amount of crosslinking monomers is preferably from 0.02 to 5 wt. %, in particular from 0.05 to 2 wt. %, based on graft base (a).

In the case of cyclic crosslinking monomers having at least 3 ethylenically unsaturated groups, it is advantageous to limit the amount to less than 1 wt. % of the graft base (a).

Preferred "other" polymerizable, ethylenically unsaturated monomers which can optionally be used in addition to the acrylic acid esters for preparing the graft base (a) are, for example, acrylonitrile, styrene, $\alpha$-methylstyrene, acrylamides, vinyl $C_1$-$C_6$-alkyl ethers, methyl methacrylate, butadiene. Preferred acrylate rubbers as the graft base (a) are emulsion polymers which have a gel content of at least 60 wt. %.

Further suitable graft bases are silicone rubbers having graft-active sites and a gel content of at least 40% (measured in dimethylformamide), as are described in Offenlegungsschriften DE 37 04 657, DE 37 04 655, DE 36 31 540 and DE 36 31 539, as well as silicone-acrylate composite rubbers.

In another embodiment, component B comprises one or more rubber-elastic graft polymers selected from the group consisting of silicone, silicone-acrylate and acrylate rubbers as graft base.

In this embodiment, component B preferably comprises one or more graft polymers prepared by graft reaction of

B.1 from 5 to 95 wt. %, preferably from 20 to 80 wt. %, in particular from 30 to 80 wt. %, of at least one vinyl monomer on

B.2 from 95 to 5 wt.%, preferably from 80 to 20 wt.%, in particular from 70 to 20 wt.%, of one or more graft bases selected from the group consisting of silicone, silicone-acrylate and acrylate rubbers, wherein the glass transition temperature is preferably < 10°C, more preferably < 0°C, particularly preferably < -20°C.

The graft base B.2 generally has a mean particle size ($d_{50}$ value) of from 0.05 to 5 $\mu$m, preferably from 0.10 to 0.5 $\mu$m, particularly preferably from 0.20 to 0.40 $\mu$m.

Monomers B.1 are preferably mixtures of

B.1.1 from 50 to 99 parts by weight, preferably from 60 to 80 parts by weight, of vinyl aromatic compounds and/or vinyl aromatic compounds substituted on the ring (such as, for example, styrene, $\alpha$-methylstyrene, p-methylstyrene, p-chlorostyrene) and/or (meth)acrylic acid (C1 C8)-alkyl esters (such as e.g. methyl methacrylate, ethyl methacrylate) and

B.1.2 from 1 to 50 parts by weight, preferably from 40 to 20 parts by weight, of vinyl cyanides (unsaturated nitriles such as acrylonitrile and methacrylonitrile) and/or (meth)acrylic acid (C1-C8)-alkyl esters (such as, for example, methyl methacrylate, n-butyl acrylate, tert-butyl acrylate) and/or derivatives (such as anhydrides and imides) of unsaturated carboxylic acids (for example maleic anhydride and N-phenylmaleimide).

Preferred monomers B.1.1 are selected from at least one of the monomers styrene, $\alpha$ -methylstyrene and methyl methacrylate; preferred monomers B.1.2 are selected from at least one of the monomers acrylonitrile, maleic anhydride and methyl methacrylate.

Particularly preferred monomers are B.1.1 styrene and B.1.2 acrylonitrile.

Silicone rubbers B.2 that are suitable consist predominantly of structural units

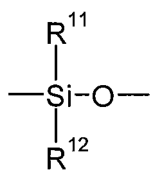

wherein

$R^{11}$ and $R^{12}$ can be identical or different and denote $C_1$-$C_6$ alkyl or cycloalkyl or $C_6$-$C_{12}$ aryl, preferably methyl, ethyl

and phenyl.

Preferred silicone rubbers B.2 are particulate with a mean particle diameter $d_{50}$ of from 0.09 to 1 μm, preferably from 0.09 to 0.4 μm, and a gel content of more than 70 wt. %, in particular from 73 to 98 wt. %, and are obtainable from

1) dihaloorganosilanes
2) from 0 to 10 mol %, based on 1), trihalosilanes, and
3) from 0 to 3 mol %, based on 1), tetrahalosilanes, and
4) from 0 to 0.5 mol %, based on 1), halotriorganosilanes,

wherein the organic radicals in compounds 1), 2), 4) are

α) $C_1$-$C_6$ alkyl or cyclohexyl, preferably methyl or ethyl,
β) $C_6$-$C_{12}$ aryl, preferably phenyl,
γ) $C_1$-$C_6$ alkenyl, preferably vinyl or allyl,
δ) mercapto $C_1$-$C_6$ alkyl, preferably mercaptopropyl,

with the proviso that the sum (γ + δ) is from 2 to 10 mol %, based on all the organic radicals of compounds 1), 2) and 4), and the molar ratio γ:δ = from 3:1 to 1:3, preferably from 2:1 to 1:2.

Preferred silicone rubbers B.2 contain as organic radicals at least 80 mol % methyl groups. The end group is generally a diorganyl-hydroxyl-siloxy unit, preferably a dimethylhydroxysiloxy unit.

Preferred silanes 1) to 4) for the production of the silicone rubbers B.2 contain chlorine as halogen substituents.

"Obtainable" means that the silicone rubber B.2 does not necessarily have to be produced from the halogen compounds 1) to 4). Silicone rubbers B.2 having the same structure, which have been produced from silanes having different hydrolysable groups, such as, for example, $C_1$-$C_6$-alkoxy groups, or from cyclic siloxane oligomers, are also to be included.

Silicone graft rubbers are mentioned as a particularly preferred component B.2. These can be produced, for example, by a three-stage process.

In the first stage, monomers such as dimethyldichlorosilane, vinylmethyldichlorosilane or dichlorosilanes are reacted with other substituents to form the cyclic oligomers (octamethylcyclotetrasiloxane or tetravinyltetramethylcyclotetrasiloxane) which are simple to purify by distillation (see Chemie in unserer Zeit 4 (1987), 121-127).

In the second stage, the crosslinked silicone rubbers are obtained from these cyclic oligomers with the addition of mercaptopropylmethyldimethoxysilane by ring-opening cationic polymerization.

In the third stage, the resulting silicone rubbers, which have graft-active vinyl and mercapto groups, are radically graft-polymerized with vinyl monomers (or mixtures).

In the second stage, preferably mixtures of cyclic siloxane oligomers such as octamethylcyclotetrasiloxane and tetramethyltetravinylcyclotetrasiloxane in emulsion are subjected to ring-opening cationic polymerization. The silicone rubbers are obtained in particulate form as an emulsion.

In this embodiment, it is particularly preferred to work according to GB-PS 1 024 014 with alkylbenzenesulfonic acids, which are active both catalytically and as an emulsifier. After the polymerization, the acid is neutralised. Instead of alkylbenzenesulfonic acids, n-alkylsulfonic acids can also be used. It is also possible additionally to use co-emulsifiers together with the sulfonic acid.

Co-emulsifiers can be non-ionic or anionic. Suitable anionic co-emulsifiers are in particular salts of n-alkyl- or n-alkylbenzene-sulfonic acids. Non-ionic co-emulsifiers are polyoxyethylene derivatives of fatty alcohols and fatty acids. Examples are POE (3)-lauryl alcohol, POE (20)-oleyl alcohol, POE (7)-nonyl alcohol or POS (10)-stearate. (The notation POE (figure)... alcohol means that a number of units of ethylene oxide corresponding to the figure have been added to one molecule of... alcohol. POE stands for polyethylene oxide. The figure is a mean value.)

The crosslinking- and graft-active groups (vinyl and mercapto groups, cf. organic radicals γ and δ) can be introduced into the silicone rubber using corresponding siloxane oligomers. These are, for example, tetramethyltetravinylcyclotetrasiloxane or γ-mercaptopropylmethyldimethoxysiloxane or its hydrolysate. They are added to the main oligomer, for example octamethylcyclotetrasiloxane, in the second stage in the desired amounts.

The incorporation of longer-chained alkyl radicals, such as, for example, ethyl, propyl or the like, or the incorporation of phenyl groups can also be achieved analogously.

Sufficient crosslinking of the silicone rubber can already be achieved when the radicals γ and δ react with one another in the emulsion polymerisation, so that the addition of an external crosslinker may be unnecessary. However, a crosslinking silane can be added in the second reaction stage in order to increase the degree of crosslinking of the silicone rubber.

Branchings and crosslinkings can be achieved by addition of, for example, tetraethoxysilane or of a silane of the formula: y-$SiX_3$, wherein

X is a hydrolysable group, in particular an alkoxy or halogen radical, and

y is an organic radical.

Preferred silanes y-$SiX_3$ are methyltrimethoxysilane and phenyltrimethoxysilane.
The gel content is determined at 25°C in acetone (see DE AS 2 521 288, col. 6,1. 17 to 37). In the silicone rubbers it is at least 70 wt. %, preferably from 73 to 98 wt. %.
Grafted silicone rubbers B can be produced by radical graft polymerization, for example analogously to DE PS 2 421 288.
In order to produce the grafted silicone rubber in the third stage, the graft monomers can be radically graft polymerized in the presence of the silicone rubber, in particular at from 40 to 90°C. The graft polymerization can be carried out in suspension, dispersion or emulsion. Continuous or discontinuous emulsion polymerization is preferred. This graft polymerization is carried out with radical initiators (e.g. peroxides, azo compounds, hydroperoxides, persulfates, perphosphates) and optionally with the use of anionic emulsifiers, for example carboxonium salts, sulfonic acid salts or organic sulfates. Graft polymers with high graft yields are thereby formed, that is to say a large proportion of the polymer of the graft monomers is chemically bonded to the silicone rubber. The silicone rubber has graft-active radicals, so that special measures for strong grafting are not required.
The grafted silicone rubbers can be produced by graft polymerization of from 5 to 95 parts by weight, preferably from 20 to 80 parts by weight, of a vinyl monomer or of a vinyl monomer mixture on from 5 to 95 parts by weight, preferably from 20 to 80 parts by weight, of silicone rubber.
A particularly preferred vinyl monomer is styrene or methyl methacrylate. Suitable vinyl monomer mixtures comprise from 50 to 95 parts by weight of styrene, $\alpha$-methylstyrene (or other styrenes substituted on the ring by alkyl or halogen) or methyl methacrylate, on the one hand, and from 5 to 50 parts by weight of acrylonitrile, methacrylonitrile, acrylic acid $C_1$-$C_{18}$-alkyl esters, methacrylic acid $C_1$-$C_{16}$-alkyl esters, maleic anhydride or substituted maleimides, on the other hand. There may additionally be present as further vinyl monomers in smaller amounts acrylic acid esters of primary or secondary aliphatic $C_2$-$C_{10}$-alcohols, preferably n-butyl acrylate or acrylic or methylacrylic acid esters of tert-butanol, preferably tert-butyl acrylate. A particularly preferred monomer mixture is from 30 to 40 parts by weight of $\alpha$-methylstyrene, from 52 to 62 parts by weight of methyl methacrylate and from 4 to 14 parts by weight of acrylonitrile.
The silicone rubbers so grafted can be worked up in known manner, for example by coagulation of the latices with electrolytes (salts, acids or mixtures thereof) and subsequent purification and drying.
In the production of the grafted silicone rubbers, free polymers or copolymers of the graft monomers forming the graft shell are generally formed to a certain degree in addition to the actual graft polymer. The product obtained by polymerization of the graft monomers in the presence of the silicone rubber is here grafted silicone rubber, to be precise, therefore, generally a mixture of graft copolymer and free (co)polymer of the graft monomers.
Graft polymers according to component B based on acrylate rubber are preferably obtainable by graft reaction of

(a) from 20 to 90 wt. %, based on the graft polymer, of acrylate rubber, preferably having a glass transition temperature below -20°C, as graft base and

(b) from 10 to 80 wt. %, based on the graft polymer, of at least one polymerizable, ethylenically unsaturated monomer (see B.1) as graft monomer.

The acrylate rubbers (a) are preferably polymers of acrylic acid alkyl esters, optionally with up to 40 wt. %, based on (a), of other polymerizable, ethylenically unsaturated monomers. The preferred polymerizable acrylic acid esters include $C_1$-$C_8$-alkyl esters, for example methyl, ethyl, butyl, n-octyl and 2-ethylhexyl ester; haloalkyl esters, preferably halo-Ci-Cs-alkyl esters, such as chloroethyl acrylate, and mixtures of these monomers.
For crosslinking, monomers with more than one polymerizable double bond can be copolymerized. Preferred examples of crosslinking monomers are esters of unsaturated monocarboxylic acids having from 3 to 8 carbon atoms and unsaturated monohydric alcohols having from 3 to 12 carbon atoms, or saturated polyols having from 2 to 4 OH groups and from 2 to 20 carbon atoms, such as, for example, ethylene glycol dimethacrylate, allyl methacrylate; polyunsaturated heterocyclic compounds, such as, for example, trivinyl and triallyl cyanurate; polyfunctional vinyl compounds, such as di- and tri-vinylbenzenes; but also triallyl phosphate and diallyl phthalate.
Preferred crosslinking monomers are allyl methacrylate, ethylene glycol dimethacrylate, diallyl phthalate and heterocyclic compounds which contain at least 3 ethylenically unsaturated groups.
Particularly preferred crosslinking monomers are the cyclic monomers triallyl cyanurate, triallyl isocyanurate, triacryloylhexahydro-s-triazine, triallylbenzenes.
The amount of crosslinking monomers is preferably from 0.02 to 5 wt. %, in particular from 0.05 to 2 wt. %, based on the rubber base.

In the case of cyclic crosslinking monomers having at least 3 ethylenically unsaturated groups, it is advantageous to limit the amount to less than 1 wt. % of the rubber base.

Preferred "other" polymerizable, ethylenically unsaturated monomers which can optionally be used in addition to the acrylic acid esters for preparing the graft base B.2 are, for example, acrylonitrile, styrene, α-methylstyrene, acrylamides, vinyl $C_1$-$C_6$-alkyl ethers, methyl methacrylate, butadiene. Preferred acrylate rubbers as the graft base B.2 are emulsion polymers which have a gel content of at least 60 wt. %.

The acrylate-based polymers are generally known, can be prepared by known processes (e.g. EP-A 244 857) or are commercial products.

The gel content of the graft base is determined at 25°C in a suitable solvent (M. Hoffmann, H. Krömer, R. Kuhn, Polymeranalytik I und II, Georg Thieme-Verlag, Stuttgart 1977).

The mean particle size $d_{50}$ is the diameter above and below which in each case 50 wt. % of the particles lie. It can be determined by means of ultracentrifuge measurement (W. Scholtan, H. Lange, Kolloid, Z. und Z. Polymere 250 (1972), 782-1796).

Unless indicated otherwise, glass transition temperatures are determined by means of differential scanning calorimetry (DSC) according to standard DIN EN 61006 at a heating rate of 10 K/min with definition of the Tg as the mid-point temperature (tangent method) and nitrogen as protecting gas.

Component B preferably comprises one or more graft polymers produced by graft reaction of

B.1 from 5 to 95 wt. %, preferably from 7 to 50 wt. %, particularly preferably from 9 to 30 wt. %, of one or more vinyl monomers on

B.2 from 95 to 5 wt. %, preferably from 93 to 50 wt. %, particularly preferably from 91 to 70 wt. %, of one or more silicone-acrylate composite rubbers as graft base,

the silicone-acrylate rubber comprising

B.2.1 from 5 to 75 wt. %, preferably from 7 to 50 wt. %, particularly preferably from 9 to 40 wt. %, silicone rubber and

B.2.2 from 95 to 25 wt. %, preferably from 93 to 50 wt. %, particularly preferably from 91 to 60 wt. %, polyalkyl (meth)acrylate rubber,

wherein the two mentioned rubber components B.2.1 and B.2.2 interpenetrate in the composite rubber so that they are substantially inseparable from one another.

The graft copolymers B are produced by radical polymerization, for example by emulsion, suspension, solution or mass polymerization, preferably by emulsion or mass polymerization.

Suitable monomers B.1 are vinyl monomers such as vinyl aromatic compounds and/or vinyl aromatic compounds substituted on the ring (such as styrene, α-methylstyrene, p-methylstyrene, p-chlorostyrene), methacrylic acid ($C_1$-$C_8$)-alkyl esters (such as methyl methacrylate, ethyl methacrylate, 2-ethylhexyl methacrylate, allyl methacrylate), acrylic acid ($C_1$-$C_8$)-alkyl esters (such as methyl acrylate, ethyl acrylate, n-butyl acrylate, tert-butyl acrylate), organic acids (such as acrylic acid, methacrylic acid) and/or vinyl cyanides (such as acrylonitrile and methacrylonitrile) and/or derivatives (such as anhydrides and imides) of unsaturated carboxylic acids (for example maleic anhydride and N-phenylmaleimide). These vinyl monomers can be used on their own or in mixtures of at least two monomers.

Preferred monomers B.1 are selected from at least one of the monomers styrene, α-methylstyrene, methyl methacrylate, n-butyl acrylate and acrylonitrile. Methyl methacrylate is particularly preferably used as the monomer B.1.

The glass transition temperature of the graft base B.2 is preferably < 10°C, more preferably < 0°C, particularly preferably < -20°C.

The graft base B.2 generally has a mean particle size (dso value) of from 0.05 to 10 μm, preferably from 0.06 to 5 μm, particularly preferably from 0.08 to 1 μm.

The silicone-acrylate rubbers are known and described, for example, in US 5,807,914, EP 430134 and US 4,888,388.

Suitable silicone rubber components of the silicone-acrylate rubbers are silicone rubbers having graft-active sites, whose production method is described, for example, in US 2,891,920, US 3,294,725, DE-OS 3 631 540, EP 249964, EP 430134 and US 4,888,388.

The silicone rubber is preferably produced by emulsion polymerization, in which siloxane monomer structural units, crosslinkers or branching agents (IV) and optionally grafting agents (V) are used.

There are used as the siloxane monomer structural units, for example and preferably, dimethylsiloxane or cyclic organosiloxanes having at least 3 ring members, preferably from 3 to 6 ring members, such as, for example and preferably, hexamethylcyclotrisiloxane, octa-methylcyclotetrasiloxane, decamethylcyclopentasiloxane, dodecamethylcyclohexasiloxane, trimethyl-triphenyl-cyclotrisiloxane, tetramethyl-tetraphenyl-cyclotetrasiloxane, octaphenylcyclo¬tetra¬siloxane. The organosiloxane monomers can be used on their own or in the form of mixtures of 2 or more monomers. The silicone rubber preferably contains not less than 50 wt. % and particularly preferably not less than 60 wt. % organosiloxane, based on the total weight of the silicone rubber component.

As crosslinkers or branching agents (IV) there are preferably used silane-based crosslinkers having a functionality of 3 or 4, particularly preferably 4. Preferred examples which may be mentioned include: trimethoxymethylsilane, triethoxyphenylsilane, tetramethoxysilane, tetraethoxysilane, tetra-n-propoxysilane and tetrabutoxysilane. The crosslinker can be used on its own or in a mixture of two or more. Tetraethoxysilane is particularly preferred.

The crosslinker is used in an amount in the range from 0.1 to 40 wt. %, based on the total weight of the silicone rubber component. The amount of crosslinker is so chosen that the degree of swelling of the silicone rubber, measured in toluene, is from 3 to 30, preferably from 3 to 25 and particularly preferably from 3 to 15. The degree of swelling is defined as the weight ratio of the amount of toluene absorbed by the silicone rubber when it is saturated with toluene at 25°C and the amount of silicone rubber in the dry state. The determination of the degree of swelling is described in detail in EP 249964.

If the degree of swelling is less than 3, that is to say if the content of crosslinker is too high, the silicone rubber does not have adequate rubber elasticity. If the swelling index is greater than 30, the silicone rubber is unable to form domain structures in the matrix polymer and therefore cannot improve impact strength either; the effect would then be similar to that of simply adding polydimethylsiloxane.

Tetrafunctional branching agents are preferred to trifunctional branching agents because the degree of swelling can then more easily be controlled within the above-described limits.

Suitable grafting agents (V) are compounds that are capable of forming structures of the following formulae:

$$CH_2=C(R^2)\text{-}COO\text{-}(CH_2)_p\text{-}SiR^1{}_nO_{(3-n)/2} \qquad (V\text{-}1)$$

$$CH_2=CH\text{-}SiR^1{}_nO_{(3-n)/2} \qquad (V\text{-}2)$$

or

$$HS\text{-}(CH_2)_p\text{-}SiR^1{}_nO_{(3-n)/2} \qquad (V\text{-}3),$$

wherein

- $R^1$ represents $C_1$-$C_4$-alkyl, preferably methyl, ethyl or propyl, or phenyl,
- $R^2$ represents hydrogen or methyl,
- n denotes 0, 1 or 2 and
- p denotes an integer from 1 to 6.

Acryloyl- or methacryloyl-oxysilanes are particularly suitable for forming the above-mentioned structure (V-1) and have a high grafting efficiency. Effective formation of the graft chains is thereby ensured, and the impact strength of the resulting resin composition is accordingly promoted.

Preferred examples which may be mentioned include: β-methacryloyloxy-ethyldimethoxymethyl-silane, γ-methacryloyloxy-propyl¬meth¬oxy¬dimethyl-silane, γ-methacryloyloxy-propyl¬dimethoxy¬methyl-silane, γ-meth¬acryloyloxy-propyltrimethoxy-silane, γ-methacryloyloxy-propylethoxy¬diethyl-silane, γ-meth¬acryl¬oyl¬oxy-propyldiethoxymethyl-silane, δ-methacryloyl-oxy-butyl¬di¬ethoxy¬methyl-silane or mixtures thereof.

Preferably from 0 to 20 wt. % of grafting agent, based on the total weight of the silicone rubber, is used.

Suitable polyalkyl (meth)acrylate rubber components of the silicone-acrylate rubbers can be prepared from methacrylic acid alkyl esters and/or acrylic acid alkyl esters, a crosslinker (VI) and a grafting agent (VII). Examples of preferred methacrylic acid alkyl esters and/or acrylic acid alkyl esters include the $C_1$- to $C_8$-alkyl esters, for example methyl, ethyl, n-butyl, tert-butyl, n-propyl, n-hexyl, n-octyl, n-lauryl and 2-ethylhexyl esters; haloalkyl esters, preferably halo-$C_1$-$C_8$-alkyl esters, such as chloroethyl acrylate, and mixtures of these monomers. n-Butyl acrylate is particularly preferred.

As crosslinkers (VI) for the polyalkyl (meth)acrylate rubber component of the silicone-acrylate rubber there can be used monomers having more than one polymerisable double bond. Preferred examples of crosslinking monomers are esters of unsaturated monocarboxylic acids having from 3 to 8 carbon atoms and unsaturated monohydric alcohols having from 3 to 12 carbon atoms, or saturated polyols having from 2 to 4 OH groups and from 2 to 20 carbon atoms,

such as ethylene glycol dimethacrylate, propylene glycol dimethacrylate, 1,3-butylene glycol dimethacrylate and 1,4-butylene glycol dimethacrylate. The crosslinkers can be used on their own or in mixtures of at least two crosslinkers.

Examples of preferred grafting agents (VII) include allyl methacrylate, triallyl cyanurate, triallyl isocyanurate or mixtures thereof. Allyl methacrylate can also be used as crosslinker (VI). The grafting agents can be used on their own or in mixtures of at least two grafting agents.

The amount of crosslinker (VI) and grafting agent (VII) is from 0.1 to 20 wt. %, based on the total weight of the polyalkyl (meth)acrylate rubber component of the silicone-acrylate rubber.

The silicone-acrylate rubber is produced by first preparing the silicone rubber in the form of an aqueous latex. The silicone rubber can be prepared by emulsion polymerization, as described, for example, in US 2,891,920 and US 3,294,725. To that end, a mixture containing organosiloxane, crosslinker and optionally grafting agent is mixed with water, with shearing, for example by means of a homogenizer, in the presence of an emulsifier based on sulfonic acid, such as, for example, alkylbenzenesulfonic acid or alkylsulfonic acid, the mixture polymerizing completely to give the silicone rubber latex. An alkylbenzenesulfonic acid is particularly suitable because it acts not only as an emulsifier but also as a polymerization initiator. In this case, a combination of the sulfonic acid with a metal salt of an alkylbenzenesulfonic acid or with a metal salt of an alkylsulfonic acid is advantageous because the polymer is thereby stabilized during the subsequent graft polymerization.

After the polymerization, the reaction is ended by neutralizing the reaction mixture by adding an aqueous alkaline solution, for example by adding an aqueous sodium hydroxide, potassium hydroxide or sodium carbonate solution.

The latex is then enriched with the methacrylic acid alkyl esters and/or acrylic acid alkyl esters that are to be used, the crosslinker (VI) and the grafting agent (VII), and a polymerization is carried out. Preference is given to an emulsion polymerization initiated by radicals, for example by a peroxide, an azo or a redox initiator. Particular preference is given to the use of a redox initiator system, especially of a sulfoxylate initiator system prepared by combining iron sulfate, disodium ethylenediaminetetraacetate, rongalite and hydroperoxide.

The grafting agent (V) that is used in the preparation of the silicone rubber has the effect of bonding the polyalkyl (meth)acrylate rubber component covalently to the silicone rubber component. In the polymerization, the two rubber components interpenetrate and thus form the composite rubber, which can no longer be separated into its constituents of silicone rubber component and polyalkyl (meth)acrylate rubber component after the polymerization.

For the production of the silicone-acrylate graft rubbers B, the monomers B.1 are grafted on to the rubber base B.2. The polymerization methods described in EP 249964, EP 430134 and US 4,888,388 can be used, for example.

For example, the graft polymerization is carried out according to the following polymerization method: In a single- or multi-stage emulsion polymerization initiated by radicals, the desired vinyl monomers B.1 are polymerized on to the graft base, which is present in the form of an aqueous latex. The grafting efficiency should thereby be as high as possible and is preferably greater than or equal to 10%. The grafting efficiency is significantly dependent on the grafting agent (V) or (VII) that is used. After the polymerization to the silicone-acrylate graft rubber, the aqueous latex is added to hot water in which metal salts, such as, for example, calcium chloride or magnesium sulfate, have previously been dissolved. The silicone-acrylate graft rubber thereby coagulates and can subsequently be separated.

Component C

Phosphazenes according to component C which are used are cyclic phosphazenes according to formula (X)

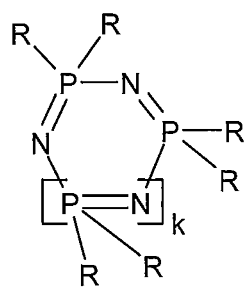

(X),

wherein

R is in each case identical or different and represents

- an amine radical,

- $C_1$- to $C_8$-alkyl, preferably methyl, ethyl, propyl or butyl, each optionally halogenated, preferably halogenated with fluorine, more preferably monohalogenated,
- $C_1$ to $C_8$-alkoxy, preferably methoxy, ethoxy, propoxy or butoxy,
- $C_5$ to $C_6$-cyclo¬alkyl each optionally substituted by alkyl, preferably $C_1$-$C_4$-alkyl, and/or by halogen, preferably chlorine and/or bromine,
- $C_6$ to $C_{20}$-aryloxy, preferably phenoxy, naphthyloxy, each optionally substituted by alkyl, preferably $C_1$-$C_4$-alkyl, and/or by halogen, preferably chlorine, bromine, and/or by hydroxy,
- $C_7$ to $C_{12}$-aralkyl, preferably phenyl-$C_1$-$C_4$-alkyl, each optionally substituted by alkyl, preferably $C_1$-$C_4$-alkyl, and/or by halogen, preferably chlorine and/or bromine, or
- a halogen radical, preferably chlorine or fluorine, or
- an OH radical,

k has the meaning mentioned above.

Preference is given to: propoxyphosphazene, phenoxyphosphazene, methylphenoxyphosphazene, aminoplios¬pha-zene and fluoroalkylphosphazenes, as well as phosphazenes having the following structures:

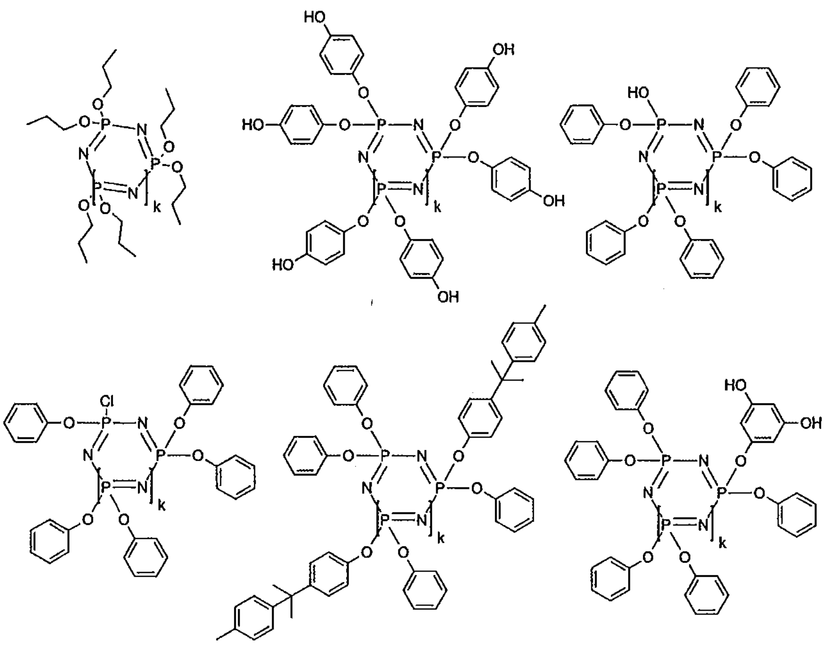

In the compounds shown above, k = 1, 2 or 3.

Preference is given to phenoxyphosphazene (all R = phenoxy) having a content of oligomers with k = 1 (C1) of from 60 to 98 mol %.

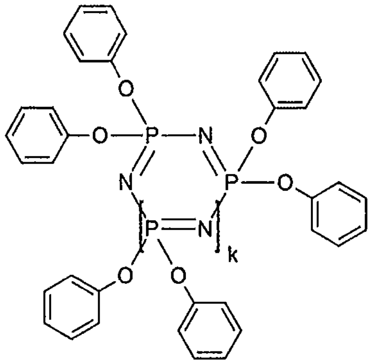

(XI)

In the case where the phosphazene according to formula (X) is halo-substituted on the phosphorus, for example from incompletely reacted starting material, the content of this phosphazene halo-substituted on the phosphorus is preferably less than 1000 ppm, more preferably less than 500 ppm.

The phosphazenes can be used on their own or in the form of a mixture, that is to say the radical R can be identical or two or more radicals of formula (X) can be different. The radicals R of a phosphazene are preferably identical.

In a further preferred embodiment, only phosphazenes with identical R are used. In a preferred embodiment, the content of tetramers (k=2) (C2) is from 2 to 50 mol %, based on component C, more preferably from 5 to 40 mol %, yet more preferably from 10 to 30 mol %, particularly preferably from 10 to 20 mol %.

In a preferred embodiment, the content of higher oligomeric phosphazenes (k = 3, 4, 5, 6 and 7) (C3) is from 0 to 30 mol %, based on component C, more preferably from 2.5 to 25 mol %, yet more preferably from 5 to 20 mol % and particularly preferably from 6 to 15 mol %.

In a preferred embodiment, the content of oligomers with k >= 8 (C4) is from 0 to 2.0 mol %, based on component C, and preferably from 0.10 to 1.00 mol %.

In a further preferred embodiment, the phosphazenes of component C fulfil all three conditions mentioned above as regards the contents (C2 - C4).

Component C is preferably a phenoxyphosphazene with a trimer content (k=1) of from 65 to 85 mol %, a tetramer content (k=2) of from 10 to 20 mol %, a content of higher oligomeric phosphazenes (k = 3, 4, 5, 6 and 7) of from 5 to 20 mol % and of phosphazene oligomers with k >= 8 of from 0 to 2 mol %, based on component C.

Component C is particularly preferably a phenoxyphosphazene with a trimer content (k=1) of from 70 to 85 mol %, a tetramer content (k=2) of from 10 to 20 mol %, a content of higher oligomeric phosphazenes (k = 3, 4, 5, 6 and 7) of from 6 to 15 mol % and of phosphazene oligomers with k >= 8 of from 0.1 to 1 mol %, based on component C.

In a further particularly preferred embodiment, component C is a phenoxyphosphazene with a trimer content (k=1) of from 65 to 85 mol %, a tetramer content (k=2) of from 10 to 20 mol %, a content of higher oligomeric phosphazenes (k = 3, 4, 5, 6 and 7) of from 5 to 15 mol % and of phosphazene oligomers with k >= 8 of from 0 to 1 mol %, based on component C.

n defines the weighted arithmetic mean of k according to the following formula:

$$n = \frac{\sum_{i=1}^{max} \mathbf{ki \cdot xi}}{\sum_{i=1}^{max} \mathbf{xi}}$$

where xi is the content of the oligomer ki, and the sum of all xi is accordingly 1.

In an alternative embodiment, n is in the range from 1.10 to 1.75, preferably from 1.15 to 1.50, more preferably from 1.20 to 1.45, and particularly preferably from 1.20 to 1.40 (including the limits of the ranges).

The phosphazenes and their preparation are described, for example, in EP A 728 811, DE A 1 961668 and WO 97/40092.

The oligomer compositions of the phosphazenes in the blend samples can also be detected and quantified, after compounding, by means of $^{31}P$ NMR (chemical shift; $\delta$ trimer: 6.5 to 10.0 ppm; $\delta$ tetramer: -10 to 13.5 ppm; $\delta$ higher oligomers: -16.5 to -25.0 ppm).

Component D

Component D comprises one or more thermoplastic vinyl (co)polymers or polyalkylene terephthalates.

Suitable as vinyl (co)polymers D are polymers of at least one monomer from the group of the vinyl aromatic

compounds, vinyl cyanides (unsaturated nitriles), (meth)acrylic acid ($C_1$-$C_8$)-alkyl esters, unsaturated carboxylic acids and derivatives (such as anhydrides and imides) of unsaturated carboxylic acids. Particularly suitable are (co)polymers of

D.1 from 50 to 99 parts by weight, preferably from 60 to 80 parts by weight, of vinyl aromatic compounds and/or vinyl aromatic compounds substituted on the ring (such as styrene, $\alpha$-methylstyrene, p-methylstyrene, p-chlorostyrene) and/or (meth)acrylic acid ($C_1$-$C_8$)-alkyl esters (such as methyl methacrylate, ethyl methacrylate), and

D.2 from 1 to 50 parts by weight, preferably from 20 to 40 parts by weight, of vinyl cyanides (unsaturated nitriles), such as acrylonitrile and methacrylonitrile, and/or (meth)acrylic acid ($C_1$-$C_8$)-alkyl esters, such as methyl methacrylate, n-butyl acrylate, tert-butyl acrylate, and/or unsaturated carboxylic acids, such as maleic acid, and/or derivatives, such as anhydrides and imides, of unsaturated carboxylic acids (for example maleic anhydride and N-phenylmaleimide).

The vinyl (co)polymers D are resin-like, thermoplastic and rubber-free. Particular preference is given to the copolymer of D.1 styrene and D.2 acrylonitrile.

The (co)polymers according to D are known and can be prepared by radical polymerization, in particular by emulsion, suspension, solution or mass polymerization. The (co)polymers preferably have mean molecular weights $M_w$ (weight-average, determined by light scattering or sedimentation) of from 15,000 to 200,000 g/mol, particularly preferably from 100,000 to 150,000 g/mol.

In a particularly preferred embodiment, D is a copolymer of 77 wt.% styrene and 23 wt.% acrylonitrile with a weight-average molecular weight $M_w$ of 130,000 g/mol.

Suitable as component D the compositions comprise one or a mixture of two or more different polyalkylene terephthalates.

Polyalkylene terephthalates are polyalkylene terephthalates which are derived from terephthalic acid (or reactive derivatives, e.g. dimethyl esters or anhydrides, thereof) and alkanediols, cycloaliphatic or araliphatic diols and mixtures thereof, for example based on propylene glycol, butanediol, pentanediol, hexanediol, 1,2-cyclohexanediol, 1,4-cyclohexane¬diol, 1,3-cyclohexanediol and cyclohexyldimethanol, wherein the diol component contains more than 2 carbon atoms. Accordingly, there are used as component D preferably polybutylene terephthalate and/or polytrimethylene terephthalate, most preferably polybutylene terephthalate.

The polyalkylene terephthalates can comprise as the monomer of the diacid also up to 5 wt. % isophthalic acid.

Preferred polyalkylene terephthalates can be prepared by known methods from terephthalic acid (or reactive derivatives thereof) and aliphatic or cycloaliphatic diols having from 3 to 21 carbon atoms (Kunststoff-Handbuch, Vol. VIII, p. 695 ff, Karl-Hanser-Verlag, Munich 1973).

Preferred polyalkylene terephthalates comprise at least 80 mol %, preferably at least 90 mol %, based on the diol component, 1,3-propanediol and/or 1,4-butanediol radicals.

As well as comprising terephthalic acid radicals, the preferred polyalkylene terephthalates can comprise up to 20 mol % of radicals of other aromatic dicarboxylic acids having from 8 to 14 carbon atoms or of aliphatic dicarboxylic acids having from 4 to 12 carbon atoms, such as radicals of phthalic acid, isophthalic acid, naphthalene-2,6-dicarboxylic acid, 4,4'-diphenyldicarboxylic acid, succinic acid, adipic acid, sebacic acid, azelaic acid, cyclohexanediacetic acid, cyclohexanedicarboxylic acid.

As well as comprising 1,3-propanediol or 1,4-butanediol radicals, the preferred polyalkylene terephthalates can comprise up to 20 mol% of other aliphatic diols having from 3 to 12 carbon atoms or cycloaliphatic diols having from 6 to 21 carbon atoms, for example radicals of 1,3-propanediol, 2-ethyl-1,3-propanediol, neopentyl glycol, 1,5-pentanediol, 1,6-hexanediol, cyclohexane-1,4-dimethanol, 3-methyl-2,4-pentanediol, 2-methyl-2,4-pentanediol, 2,2,4-trimethyl-1,3-pentanediol and 2-ethyl-1,6-hexanediol, 2,2-diethyl-1,3-propanediol, 2,5-hexane¬diol, 1,4-di-($\beta$-hydroxyethoxy)-benzene, 2,2-bis-(4-hydroxycyclohexyl)-propane, 2,4-dihydroxy-1,1,3,3-tetra¬methyl-cyclobutane, 2,2-bis-(3-$\beta$-hydroxyethoxyphenyl)-propane and 2,2-bis-(4-hydroxypropoxy¬phenyl)-propane (DE A 24 07 674, 24 07 776, 27 15 932).

The polyalkylene terephthalates can be branched by incorporation of relatively small amounts of tri- or tetrahydric alcohols or tri- or tetra-basic carboxylic acids, as are described, for example, in DE-A 19 00 270 and US-A 3 692 744. Examples of preferred branching agents are trimesic acid, trimellitic acid, trimethylol-ethane and -propane and pentaerythritol.

It is advisable to use not more than 1 mol % of the branching agent, based on the acid component.

Particular preference is given to polyalkylene terephthalates that have been prepared solely from terephthalic acid or reactive derivatives thereof (e.g. dialkyl esters thereof, such as dimethyl terephthalate) and 1,3-propanediol and/or 1,4-butanediol (polypropylene and polybutylene terephthalate) and mixtures of such polyalkylene terephthalates.

Preferred polyalkylene terephthalates are also copolyesters prepared from at least two of the above-mentioned acid components and/or from at least two of the above-mentioned alcohol components, particularly preferred copolyesters are poly-(1,3-propylene glycol/1,4-butanediol) terephthalates.

The polyalkylene terephthalates generally have an intrinsic viscosity of approximately from 0.4 to 1.5 dl/g, preferably from 0.5 to 1.3 dl/g, in each case measured in phenol/o-dichlorobenzene (1:1 parts by weight) at 25°C.

In an alternative embodiment, the polyesters prepared can also be used in admixture with other polyesters and/or further polymers, preference being given here to the use of mixtures of polyalkylene terephthalates with other polyesters.

Component(s) E

The composition can comprise further conventional polymer additives, such as flame-retardant synergists other than antidripping agents, lubricants and release agents (for example pentaerythritol tetrastearate), nucleating agents, stabilizers (for example UV/light stabilizers, heat stabilizers, antioxidants, transesterification inhibitors, hydrolytic stabilizers), antistatics (for example conductive blacks, carbon fibers, carbon nanotubes as well as organic antistatics such as polyalkylene ethers, alkyl sulfonates or polyamide-containing polymers) as well as colorants, pigments, fillers, talc and reinforcing materials, in particular glass fibers, mineral reinforcing materials and carbon fibers.

There are preferably used as stabilizers sterically hindered phenols and phosphites or mixtures thereof, such as, for example, Irganox® B900 (Ciba Speciality Chemicals). Pentaerythritol tetrastearate is preferably used as the release agent. Carbon black is further preferably used as a black pigment (e.g. Blackpearls).

As well as comprising optional further additives, particularly preferred molding compositions comprise as component E a release agent, particularly preferably pentaerythritol tetrastearate, in an amount of from 0.1 to 1.5 parts by weight, preferably from 0.2 to 1.0 part by weight, particularly preferably from 0.3 to 0.8 part by weight. As well as comprising optional further additives, particularly preferred molding compositions comprise as component E at least one stabilizer, for example selected from the group of the sterically hindered phenols, phosphites and mixtures thereof and particularly preferably Irganox® B900, in an amount of from 0.01 to 0.5 part by weight, preferably from 0.03 to 0.4 part by weight, particularly preferably from 0.06 to 0.3 part by weight.

The combination of PTFE (component F), pentaerythritol tetrastearate and Irganox® B900 with a phosphorus-based flame retardant as component C is also particularly preferred.

Optionally, talc may be added within component E. The particular types of talc are distinguished by a particularly high purity, characterized by an MgO content of from 28 to 35 wt. %, preferably from 30 to 33 wt. %, particularly preferably from 30.5 to 32 wt. %, and an $SiO_2$ content of from 55 to 65 wt. %, in particular from 58 to 64 wt. %, particularly preferably from 60 to 62.5 wt. %. Preferred types of talc are further distinguished by an $Al_2O_3$ content of less than 5 wt. %, particularly preferably less than 1 wt. %, in particular less than 0.7 wt. %.

A commercially available type of talc which corresponds to this definition is, for example, Luzenac®3CA from Luzenac Naintsch Mineralwerke GmbH (Graz, Austria).

The use of the talc according to the invention in the form of finely ground types having a mean particle size dso of from 0.1 to 4.0 μm, preferably from 0.2 to 3.0 μm, particularly preferably from 0.5 to 2.5 μm, most particularly preferably from 0.7 to 1.8 μm, is particularly advantageous. The mean particle size $d_{50}$ is the diameter above and below which in each case 50 wt. % of the particles lie. It is also possible to use mixtures of talc types that differ in their mean particle sizes $d_{50}$.

The talc can be surface-treated, for example silanised, in order to ensure better compatibility with the polymer. In view of the processing and production of the molding compositions, the use of compacted talc is also advantageous.

Component F

There are used as antidripping agents in particular polytetrafluoroethylene (PTFE) or PTFE-containing compositions such as, for example, masterbatches of PTFE with styrene- or methyl-methacrylate-containing polymers or copolymers, in the form of powders or in the form of a coagulated mixture, for example with component B.

The fluorinated polyolefins used as antidripping agents have a high molecular weight and have glass transition temperatures of over -30°C, generally over 100°C, fluorine contents of preferably from 65 to 76 wt.%, in particular from 70 to 76 wt.%, mean particle diameters $d_{50}$ of from 0.05 to 1000 μm, preferably from 0.08 to 20 μm. In general, the fluorinated polyolefins have a density of from 1.2 to 2.3 $g/cm^3$. Preferred fluorinated polyolefins are polytetrafluoroethylene, polyvinylidene fluoride, tetrafluoroethylene/hexafluoropropylene and ethylene/tetrafluoroethylene copolymers. The fluorinated polyolefins are known (see "Vinyl and Related Polymers" by Schildknecht, John Wiley & Sons, Inc., New York, 1962, pages 484-494; "Fluorpolymers" by Wall, Wiley-Interscience, John Wiley & Sons, Inc., New York, Volume 13, 1970, pages 623-654; "Modern Plastics Encyclopedia", 1970-1971, Volume 47, No. 10 A, October 1970, McGraw-Hill, Inc., New York, pages 134 and 774; "Modern Plastics Encyclopedia", 1975-1976, October 1975, Volume 52, No. 10 A, McGraw-Hill, Inc., New York, pages 27, 28 and 472 and US-PS 3 671 487, 3 723 373 and 3 838 092).

They can be prepared by known processes, for example by polymerization of tetrafluoroethylene in an aqueous medium with a free-radical-forming catalyst, for example sodium, potassium or ammonium peroxodisulfate, at pressures

of from 7 to 71 kg/cm$^2$ and at temperatures of from 0 to 200°C, preferably at temperatures of from 20 to 100°C. (For further details see e.g. US patent 2 393 967.) Depending on the form in which they are used, the density of these materials can be from 1.2 to 2.3 g/cm$^3$, and the mean particle size can be from 0.05 to 1000 $\mu$m.

The fluorinated polyolefins that are preferred have mean particle diameters of from 0.05 to 20 $\mu$m, preferably from 0.08 to 10 $\mu$m, and density of from 1.2 to 1.9 g/cm$^3$.

Suitable fluorinated polyolefins F which can be used in powder form are tetrafluoroethylene polymers having mean particle diameters of from 100 to 1000 $\mu$m and densities of from 2.0 g/cm$^3$ to 2.3 g/cm$^3$. Suitable tetrafluoroethylene polymer powders are commercial products and are supplied, for example, by DuPont under the trade name Teflon®.

As well as comprising optional further additives, particularly preferred flame-retardant compositions comprise as component F a fluorinated polyolefin in an amount of from 0.05 to 5.0 parts by weight, preferably from 0.1 to 2.0 parts by weight, particularly preferably from 0.3 to 1.0 part by weight.

Additional materials of construction, such as a thermal interface material and a thermally conductive material, are discussed in relation to embodiments of the device immediately below.

II. Device for Cooling Battery Cells

As shown in FIG. 1, device for cooling battery cells 10 may be comprised of one or more cooling channel parts, such as first cooling channel part 12 and second cooling channel part 13. While in a preferred embodiment of the present invention the materials of construction include a polycarbonate blend as discussed hereinabove, other materials of construction may also be considered for use in the device discussed below, including cast metals such as aluminum and stainless steel. In choosing materials of construction, the weight of the materials, its strength, suitability for automotive use and corrosion resistance are factors to consider. The device may include one or more openings 9 for battery cells to be fitted therein. As shown in FIG. 2, device for cooling battery cells 13a may be constructed of one single plastic cooling channel, rather than in multiple parts as discussed below in different embodiments.

As shown in FIG. 4, first cooling channel part 12 and second cooling channel part 13 may each be injection molded, and attached together. Second cooling channel part 13 further comprises port 17 through which cooling fluid may enter or exit the device. Second cooling channel part 13 comprises outer surface 15 and inner surface 14. As shown in FIG. 3, one or more battery cells 16 may be fitted into the device, which are not in contact with inner surface 14. For example, cooling fluid may enter the device through port 17, where the fluid is in contact with inner surface 14 as it travels through fluid channel 18, before exiting through an outlet port (not shown). The cooling fluid cools inner surface 14, which in turn cools one or more battery cells 16. In this embodiment of the invention, there is no metal cooling plate in between the cooling fluid and the one or more battery cells 16.

The device may further comprise a thermal interface material (not shown), which may be disposed between the one or more battery cells 16 and the second cooling channel part 13. Thermal energy generated by the one or more battery cells 16 may be transferred by conduction directly into second cooling channel part 13 or through the thermal interface material if used, and then through second cooling channel part 13. The thermal energy will transfer to a cooling fluid circulated through fluid channel 18, which enters and exits the device through one or more ports 17, as shown in FIG. 5. The thermal interface material is preferably a material having a higher thermal conductivity than second cooling channel part 13. Suitable materials include silicone rubbers.

As shown in FIG. 6, first cooling channel part 12 may include grooves 20 for receiving an elastomeric sealant such as silicone to prevent leaks of the cooling fluid, when first cooling channel part 12 is attached to second cooling channel part 13 (shown in FIG. 7). As shown in FIG. 6, an elastomeric sealant may be placed in grooves 20 to bond first cooling channel part 12 to inner surface 14 of second cooling channel part 13. The grooves may serve to direct the silicone, which may be liquid injection molded. In addition to cooling one or more battery cells 18, the double wall design of the device also provides impact protection for the battery cells, as fluid channel 18 acts as an additional crush zone in case of an impact. Also, there would be a displacement of cooling fluid which will also help absorb impact energy, thus minimizing damage to one or more battery cells 16.

As shown in FIG. 8, device 30 may be created in a modular design, built to attach to a second identical device 30a, each of which comprise ports 31 for receiving or discharging cooling fluid. Devices 30 and 30a connect together with additional devices as necessary to achieve the desired electrical energy output. The modularity of the device allows scalability by varying the number and design of connected devices to provide common power output, and increased reliability if one battery cell should fail.

FIG. 9 shows another embodiment of the invention, in which plastic cooling channel 40, comprising ports 42, is designed for a placement of pouch-type battery cell 41 within it, and also for attachment to additional devices 39. Plastic cooling channel 40 may further comprise additional structures to keep the device in place within an automobile or other vehicle. Alternatively, an external support structure may be used to support the plastic cooling channel and/or battery cells, and to fit them within the vehicle. As shown in FIG. 10, the device of this embodiment includes plastic cooling channel 40 and thermally conductive material 43. Plastic cooling channel 40 comprises ports 42, grooves 44

and cooling channels 46. Thermally conductive material 43 is attached to plastic cooling channel 40 by the use of an elastomeric sealant placed in grooves 44, which attaches plastic cooling channel 40 to thermally conductive material 43. Thermally conductive material 43 may be a metal plate, such as aluminum or stainless steel which acts as a good thermal conductor, and is resistant to chemical erosion from the cooling fluid. Plastic cooling channel 40 is preferably constructed through injection molding.

As shown in FIG. 11, plastic cooling channel 40a comprises one or more ports 42a, and fluid channel 45a. Cooling fluid enters through one or more ports 42a, goes through fluid channel 45a, and exits through one or more ports 42a. A pouch-type battery cell may be placed adjacent to fluid channel 45a, and is cooled through the transfer of heat from the battery cell, through fluid channel 45a to the cooling fluid located therein. In this embodiment, there is no metal cooling plate placed in between the cooling fluid and the battery. Plastic cooling channel 40a may be attached to other devices through the use of an elastomeric sealant 44a, about one or more ports 42. Plastic cooling channel 40a is preferably constructed through blow molding.

FIG. 12 shows the embodiment of FIG. 10, with the placement of pouch-type battery cell 41 and thermally conductive material 43 fitted against plastic cooling channel 40, which in turn is connected to additional devices of the same design. As shown in FIG. 13, multiple devices attached together may form arrays 47 and 47a, which may be combined to form larger array 48. Also as shown in FIG. 13, devices may have additional features, such as electrical outlet 49, electrical meter 50, and additional attachments (not shown) to measure the performance and temperature of each battery. Control valves may be added which can efficiently direct cooling fluid to where it is most needed for thermal management efficiency.

The plastic cooling channel of the present invention preferably comprises a polycarbonate, among other materials, for its high strength and impact resistance properties. Certain polycarbonate blends are known to have strong chemical resistance, which may be useful for applications such as this one which are designed for long-term contact with a cooling fluid. In another embodiment of the invention, polycarbonate blends with a phosphazene additive may be used, as such blends have exhibited high levels of chemical and hydrolysis resistance, in addition to flame retardency, when tested with automotive cooling fluids, such as mixtures of glycol and water. Such polycarbonate blends have been described in published applications WO 2014/086769 and WO 2014/086800, which are each incorporated by reference herein. Preferably, this incorporation is specifically made with respect to the chemical composition of the blends and thus, refers to their constituents, the ratios and amounts of their constituents in all embodiments and especially the preferred embodiments described therein. In yet another embodiment of the invention, the plastic cooling channel is substantially electrically non-conductive and thermally conductive. In still another embodiment of the invention, the inner surface of the plastic cooling channel is substantially free of metal.

Many phosphorus-containing flame retardants are known to have poor hydrolysis resistance. US Patent Application Publication 2009/0281216 discusses the shortcomings of acid phosphite stabilizers. US Patent 7,851,529 likewise discloses that phosphorus based flame retardants used in polycarbonate resins, may reduce its recyclability, because the resulting molded part may be deteriorated by hydrolysis. However, it has been found that there are differences in hydrolysis resistance, between polycarbonate resins that use different phosphorus-based flame retardants.

Several different polycarbonate molding compositions that comprise phosphorus-containing flame retardant additives, including triphenylphosphate (TPP), bisphenol A bis(-diphenyl phosphate) (BDP) and phenoxyphosphazene, were each tested for hydrolysis resistance against a simulated automotive cooling fluid of 50 wt.% water and 50 wt.% ethylene glycol. To simulate a dramatic effect of cooling fluid present in a battery cooling device over a long period at elevated temperatures, samples of each were oven aged for seven (7) days at 95°C. The melt flow rate (MVR) of each composition was measured at each compound's respective molding temperature. Measurements were taken for samples that were not subjected to oven aging in the cooling fluid, and others that were. The melt flow rate was determined according to ISO 1133. The results are as follows:

TABLE I

| | Composition A | Composition B | Composition C | Composition D |
|---|---|---|---|---|
| phosphorus-based flame retardant | TPP | BDP | BDP | phenoxyphosphazene |
| amount (wt. %) | 7.3% | 10.0% | 5.0% | 6.5% |
| molding temperature | 240°C | 240°C | 300°C | 260°C |

(continued)

| | Composition A | Composition B | Composition C | Composition D |
|---|---|---|---|---|
| MVR without oven aging ($cm^3$/ 10 min) | 20.1 @ 240°C/ 5 kg | 13.9 @ 240°C/ 5 kg | 29.5 @ 300°C/ 1.2 kg | 13.4 @ 260°C/ 5 kg |
| MVR after oven aging ($cm^3$/ 10 min) | 75.5 @ 240°C/ 5 kg | 53.4 @ 240°C/ 5 kg | unable to measure (>100 @ 300°C/ 1.2 kg) | 23.2 @ 260°C/ 5 kg |
| % change | 275% | 284% | >240% | 73% |

As can be observed by the above results, the polycarbonate composition that included a phosphazene as its phosphorus-based flame retardant showed surprisingly higher hydrolysis resistance to the simulated automotive cooling fluid in comparison to other polycarbonate molding compositions, having different phosphorus-based molding compositions, including TPP and BDP. Thus, it is recommended to use such a composition in conjunction with the battery cooling device of the present invention.

Preferably, the phosphazene additive comprises between 2 wt.% and 10 wt.% of the molding composition. Most preferably, the phosphazene additive comprises between 5 wt.% and 8 wt. %, or between 6 wt.% and 7 wt. %. In another preferred embodiment of the invention, the phosphazene additive is phenoxyphosphazene.

**Claims**

1. A plastic molded device for cooling battery cells comprising:

   - a plastic cooling channel having an inner surface and an outer surface;
   - wherein the cooling channel comprises a polycarbonate and a phosphazene additive;
   - wherein the cooling channel is configured for a fluid to contact the inner surface, and for preventing the fluid from contacting the outer surface;
   and
   - wherein the outer surface is configured to structurally support the battery cells or wherein the plastic molded device comprises a support frame.

2. The plastic molded device of Claim 1, wherein the plastic cooling channel is comprised of a first cooling channel part and a second cooling channel part, which are fixedly attached to each other through the use of a silicone sealant.

3. The plastic molded device of Claim 2, wherein the first cooling channel part comprises grooves that direct liquid injection molded silicone.

4. The plastic molded device of any of the preceding claims, wherein the plastic cooling channel is substantially electrically nonconductive and thermally conductive.

5. The plastic molded device of any of the preceding claims, wherein the inner surface is substantially free of metal.

6. The plastic molded device of any of the preceding claims, wherein the outer surface is not in contact with a metal cooling plate.

7. The plastic molded device of any of the preceding claims, wherein the device further comprises a thermal interface material applied to the outer wall of the cooling channel.

8. The plastic molded device of any of the preceding claims, wherein the device is constructed of a modular design for attachment to another plastic molded device for cooling battery cells.

9. The plastic molded device of any of the preceding claims, further comprising one or more control valves to adjust or divert the flow of the cooling fluid to increase the thermal management efficiency of the battery cells.

**10.** A battery cooling management system comprising a plastic molded device of any of the preceding claims.

## Patentansprüche

**1.** Geformte Kunststoffvorrichtung zum Kühlen von Batteriezellen, die Folgendes umfasst:

- einen Kunststoffkühlkanal mit einer Innenfläche und einer Außenfläche;
- wobei der Kühlkanal ein Polycarbonat und ein Phosphazenadditiv umfasst;
- wobei der Kühlkanal so ausgestaltet ist, dass ein Fluid mit der Innenfläche in Kontakt gelangt, und so, dass ein Kontakt des Fluids mit der Außenfläche verhindert wird;
- wobei die Außenfläche so ausgestaltet ist, dass sie die Batteriezellen strukturell abstützt oder wobei die geformte Kunststoffvorrichtung einen Tragrahmen umfasst.

**2.** Geformte Kunststoffvorrichtung nach Anspruch 1, wobei der Kunststoffkühlkanal aus einem ersten Kühlkanalteil und einem zweiten Kühlkanalteil besteht, die mittels eines Silicondichtmittels fest aneinander befestigt sind.

**3.** Geformte Kunststoffvorrichtung nach Anspruch 2, wobei das erste Kühlkanalteil Rillen umfasst, die flüssiges spritzgegossenes Silicon leiten.

**4.** Geformte Kunststoffvorrichtung nach einem der vorstehenden Ansprüche, wobei der Kunststoffkühlkanal im Wesentlichen elektrisch nichtleitend und thermisch leitend ist.

**5.** Geformte Kunststoffvorrichtung nach einem der vorstehenden Ansprüche, wobei die Innenfläche im Wesentlichen frei von Metall ist.

**6.** Geformte Kunststoffvorrichtung nach einem der vorstehenden Ansprüche, wobei die Außenfläche sich nicht in Kontakt mit einer Metallkühlplatte befindet.

**7.** Geformte Kunststoffvorrichtung nach einem der vorstehenden Ansprüche, wobei die Vorrichtung weiterhin ein Wärmeleitmaterial umfasst, das auf der Außenwand des Kühlkanals aufgebracht ist.

**8.** Geformte Kunststoffvorrichtung nach einem der vorstehenden Ansprüche, wobei die Vorrichtung aus einer modularen Konstruktion zur Anbringung an einer anderen geformten Kunststoffvorrichtung zum Kühlen von Batteriezellen besteht.

**9.** Geformte Kunststoffvorrichtung nach einem der vorstehenden Ansprüche, die weiterhin ein oder mehrere Steuerventile zum Einstellen oder Umleiten des Flusses des Kühlfluids zur Erhöhung der Wirksamkeit des Wärmemanagements der Batteriezellen umfasst.

**10.** Batteriekühlungs-Managementsystem, das eine geformte Kunststoffvorrichtung nach einem der vorstehenden Ansprüche umfasst.

## Revendications

**1.** Dispositif moulé en plastique pour le refroidissement de cellules de batterie, comprenant :

- un canal de refroidissement en plastique ayant une surface intérieure et une surface extérieure ;
- dans lequel le canal de refroidissement comprend un polycarbonate et un additif phosphazène ;
- dans lequel le canal de refroidissement est configuré pour qu'un fluide vienne en contact avec la surface intérieure, et pour empêcher le fluide de venir en contact avec la surface extérieure ;
et
- dans lequel la surface extérieure est configurée pour supporter structurellement les cellules de batterie ou dans lequel le dispositif moulé en plastique comprend un cadre de support.

**2.** Dispositif moulé en plastique selon la revendication 1, dans lequel le canal de refroidissement en plastique est composé d'une première partie de canal de refroidissement et d'une deuxième partie de canal de refroidissement,

qui sont attachées de manière fixe l'une à l'autre par l'utilisation d'un agent d'étanchéité en silicone.

3. Dispositif moulé en plastique selon la revendication 2, dans lequel la première partie de canal de refroidissement comprend des rainures qui dirigent de la silicone liquide moulée par injection.

4. Dispositif moulé en plastique selon l'une quelconque des revendications précédentes, dans lequel le canal de refroidissement en plastique est essentiellement électriquement non conducteur et thermiquement conducteur.

5. Dispositif moulé en plastique selon l'une quelconque des revendications précédentes, dans lequel la surface intérieure est essentiellement exempte de métal.

6. Dispositif moulé en plastique selon l'une quelconque des revendications précédentes, dans lequel la surface extérieure n'est pas en contact avec une plaque de refroidissement métallique.

7. Dispositif moulé en plastique selon l'une quelconque des revendications précédentes, dans lequel le dispositif comprend en outre un matériau d'interface thermique appliqué à la paroi extérieure du canal de refroidissement.

8. Dispositif moulé en plastique selon l'une quelconque des revendications précédentes, dans lequel le dispositif est construit de façon modulaire pour être attaché à un autre dispositif moulé en plastique pour le refroidissement de cellules de batterie.

9. Dispositif moulé en plastique selon l'une quelconque des revendications précédentes, comprenant en outre une ou plusieurs soupapes de commande pour ajuster ou dévier l'écoulement du fluide de refroidissement afin d'augmenter l'efficacité de gestion thermique des cellules de batterie.

10. Système de gestion du refroidissement d'une batterie comprenant le dispositif moulé en plastique selon l'une quelconque des revendications précédentes.

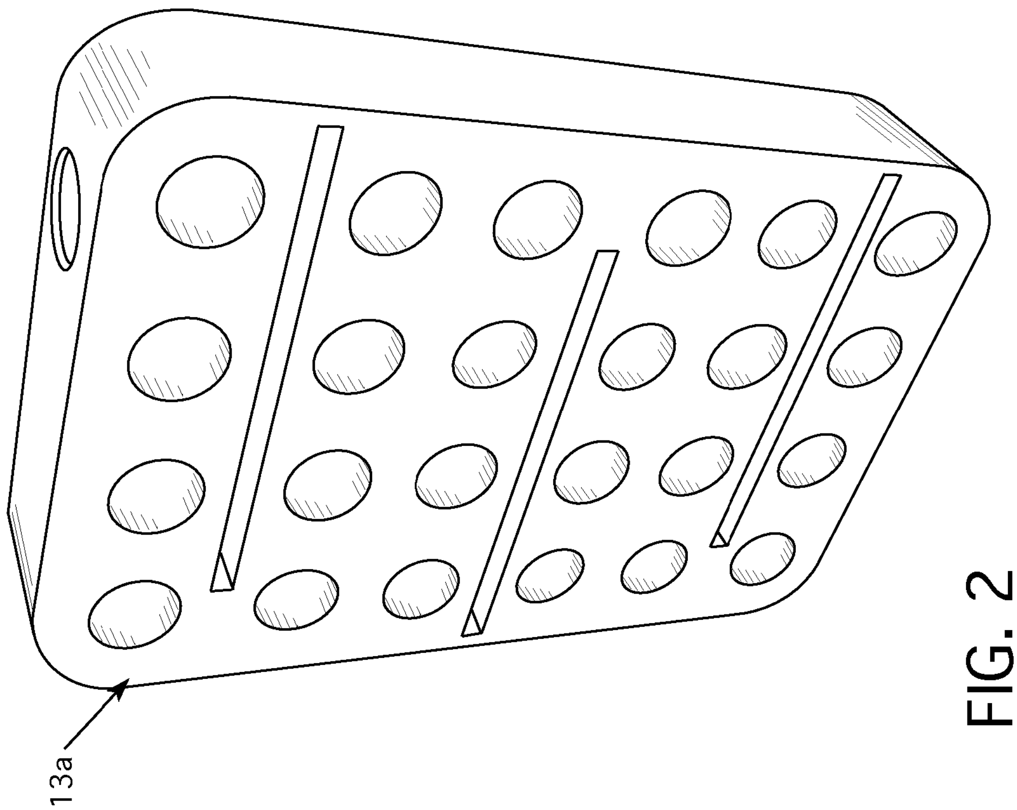


FIG. 2

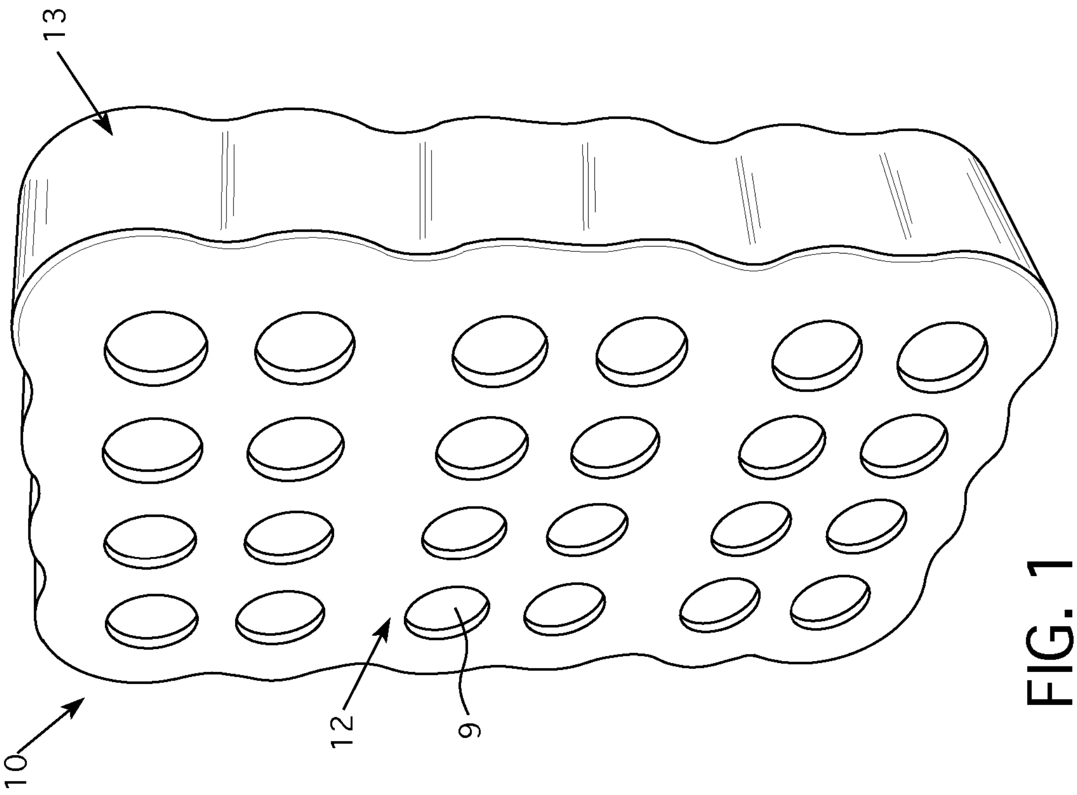


FIG. 1

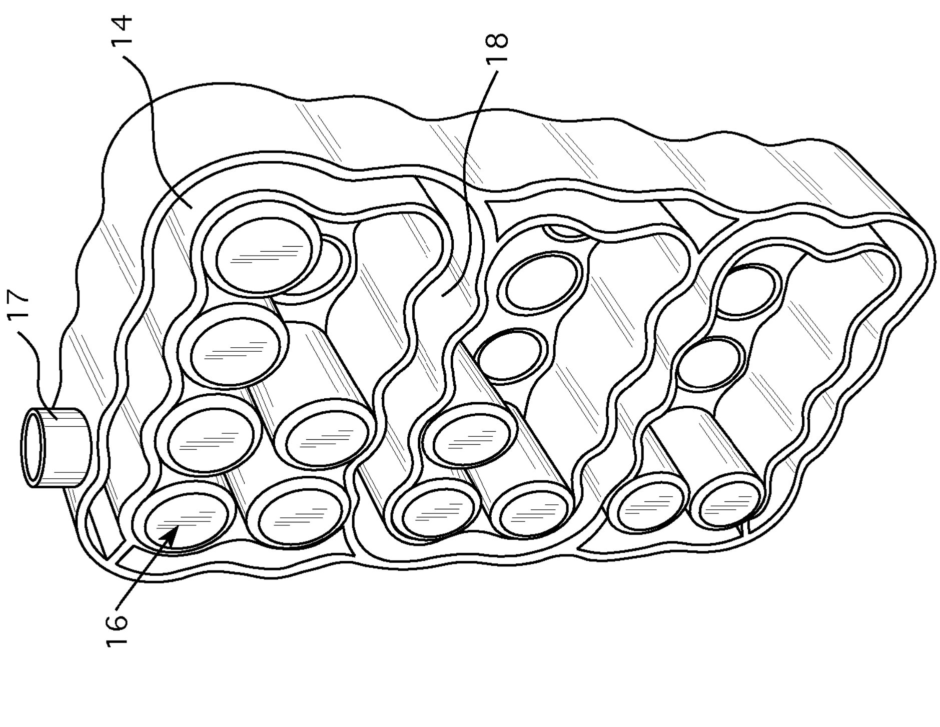


FIG. 3

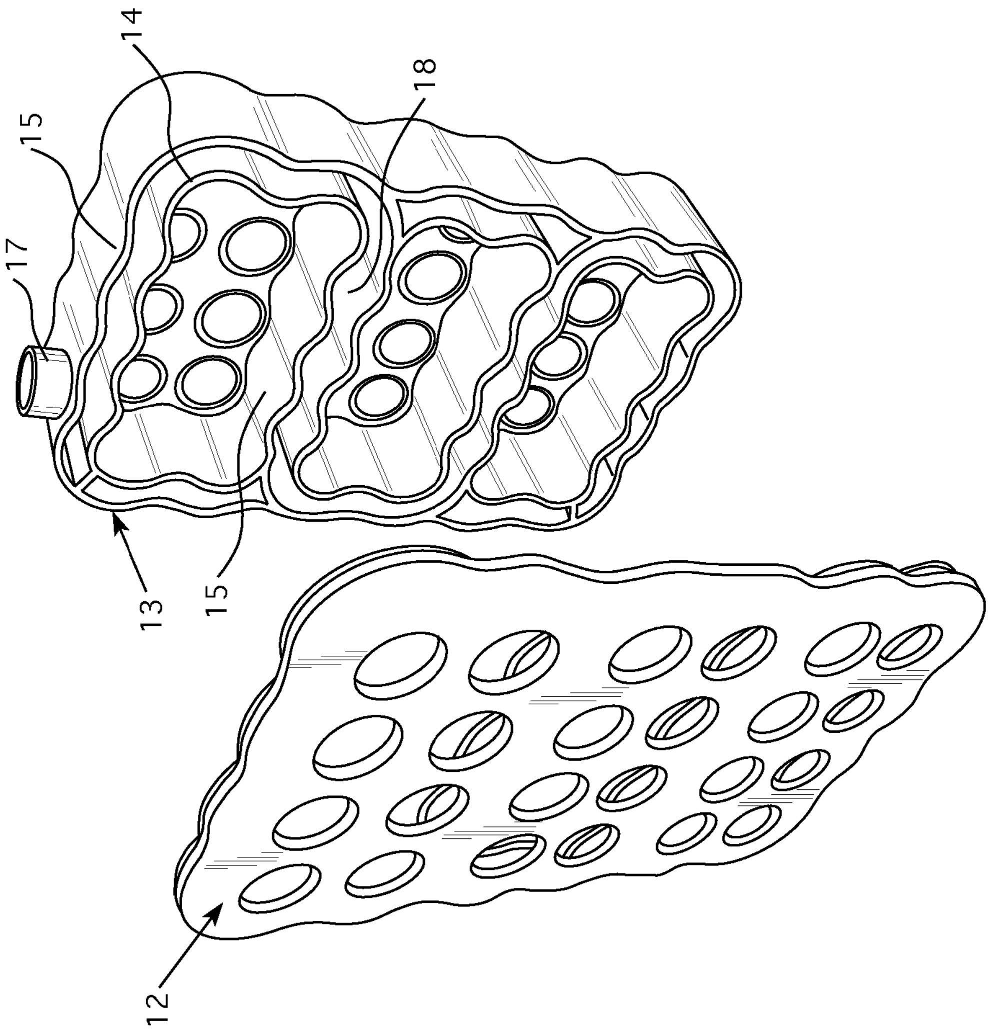


FIG. 4

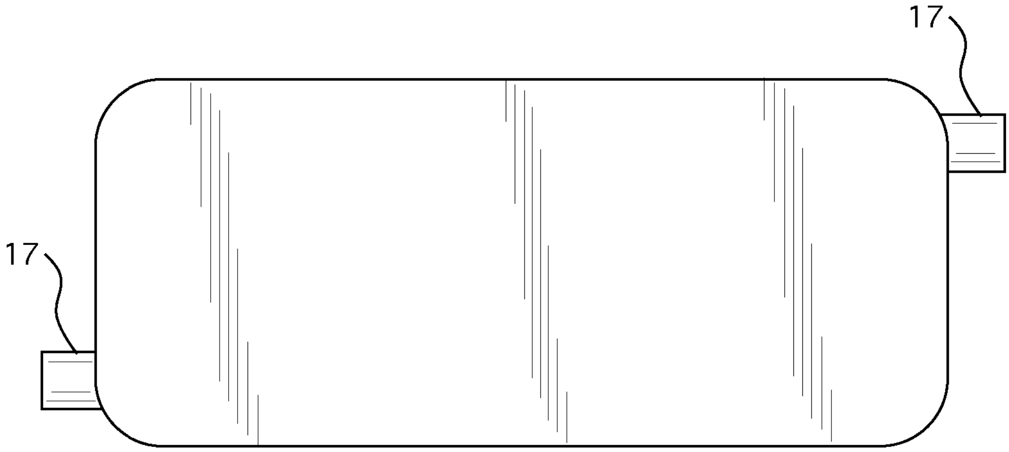


FIG. 5

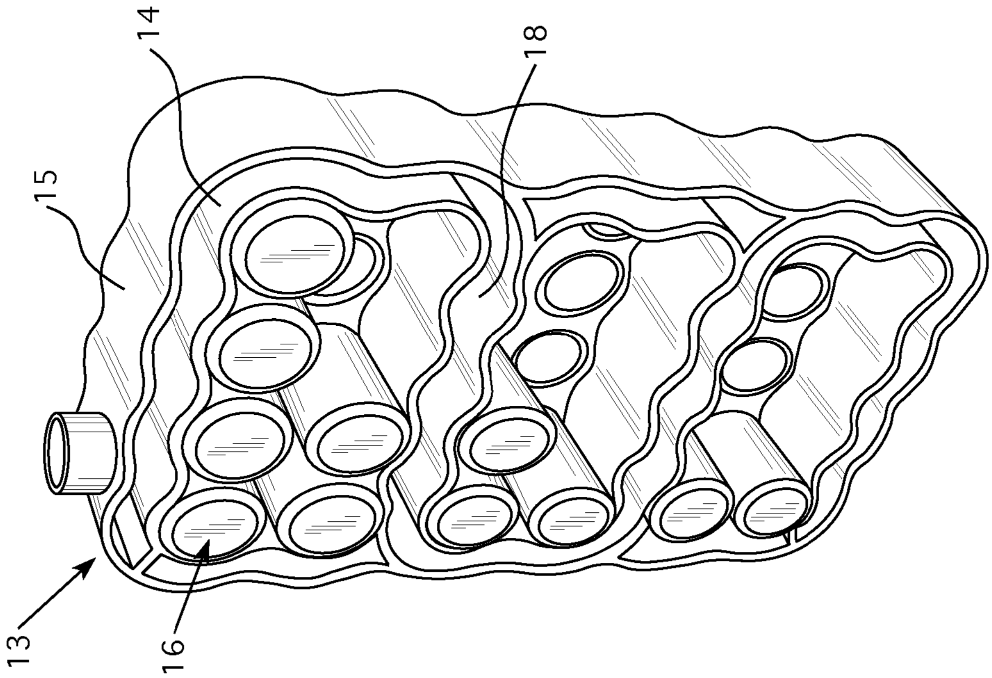


FIG. 7

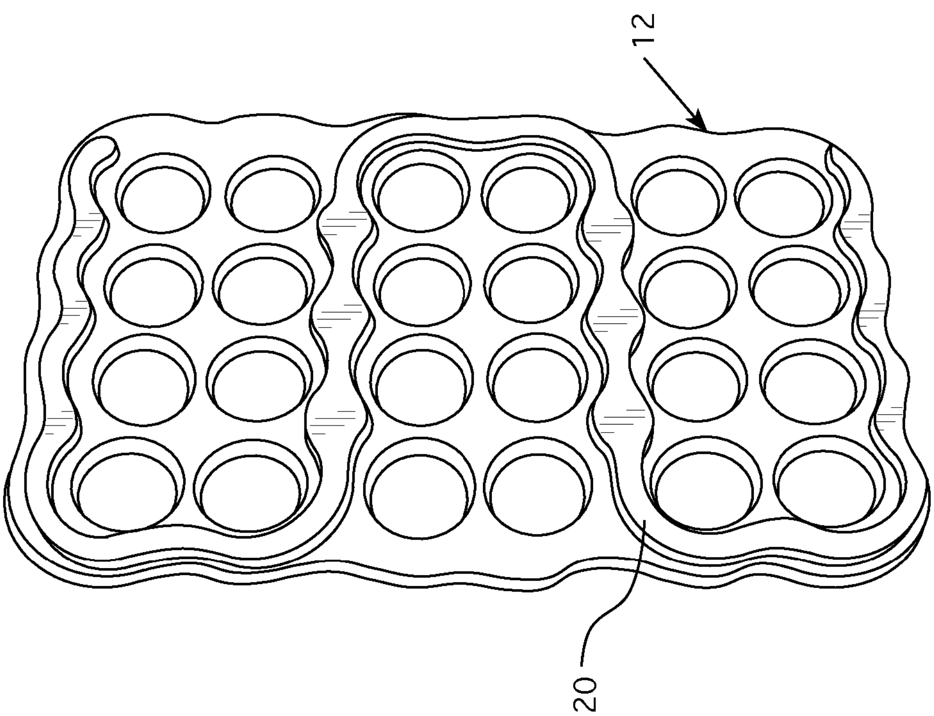


FIG. 6

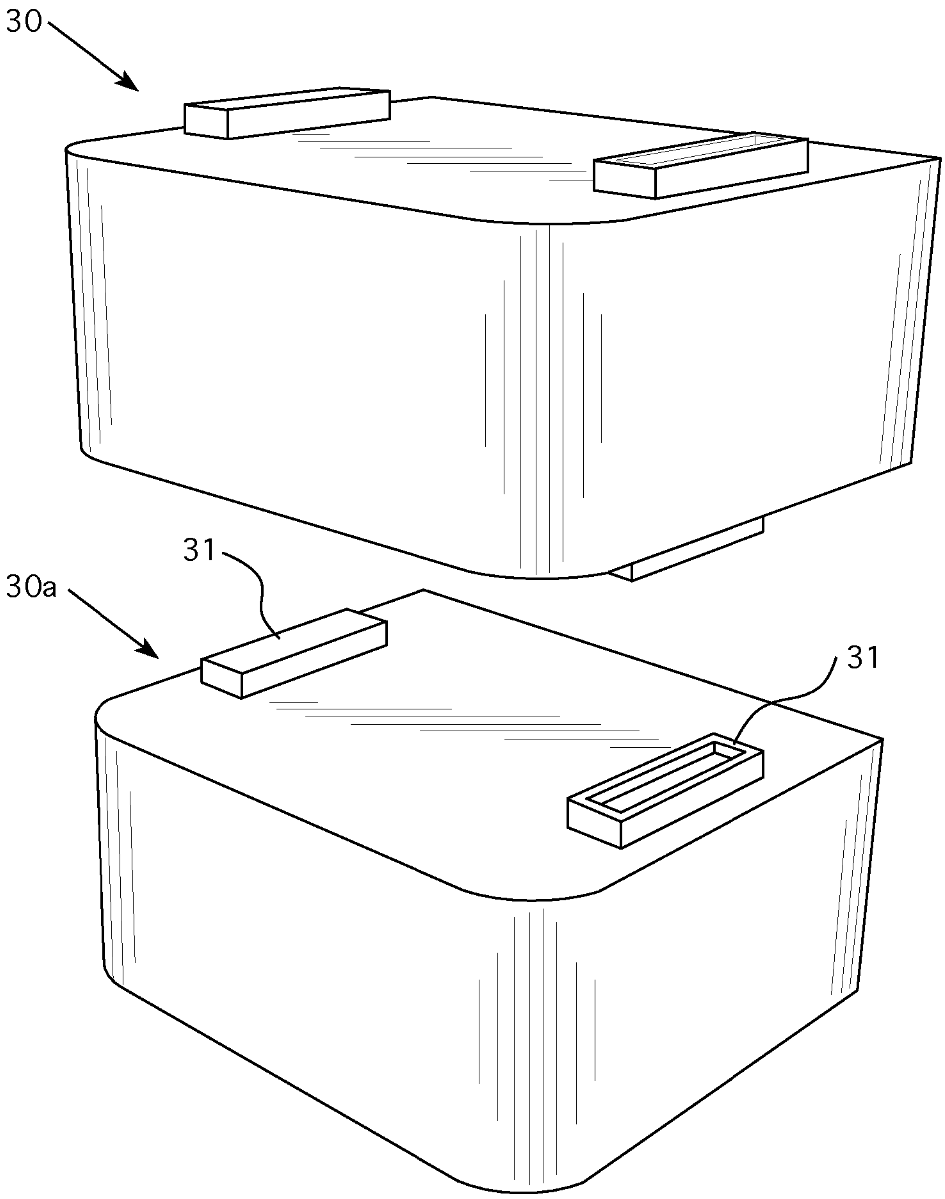


FIG. 8

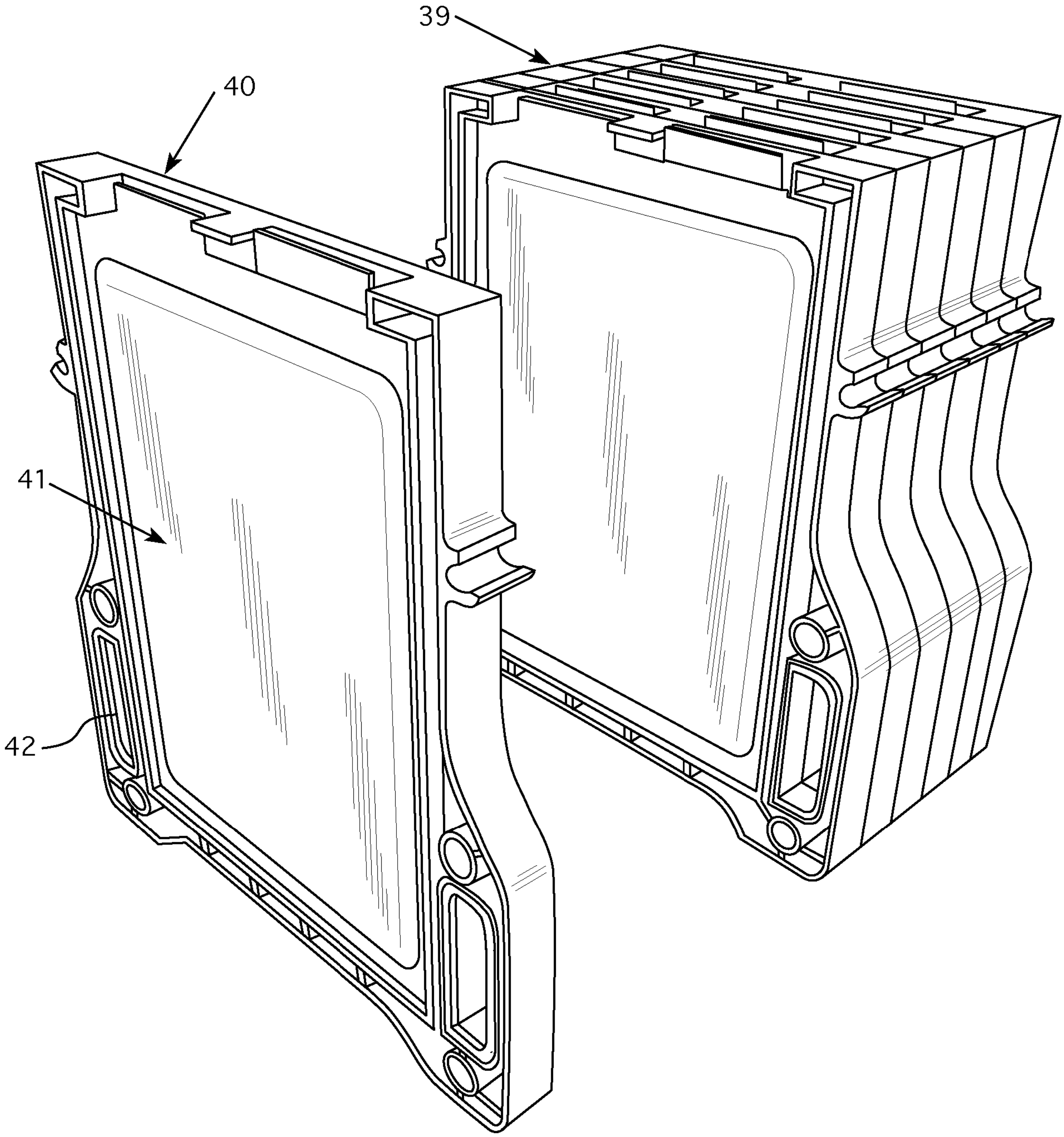


FIG. 9

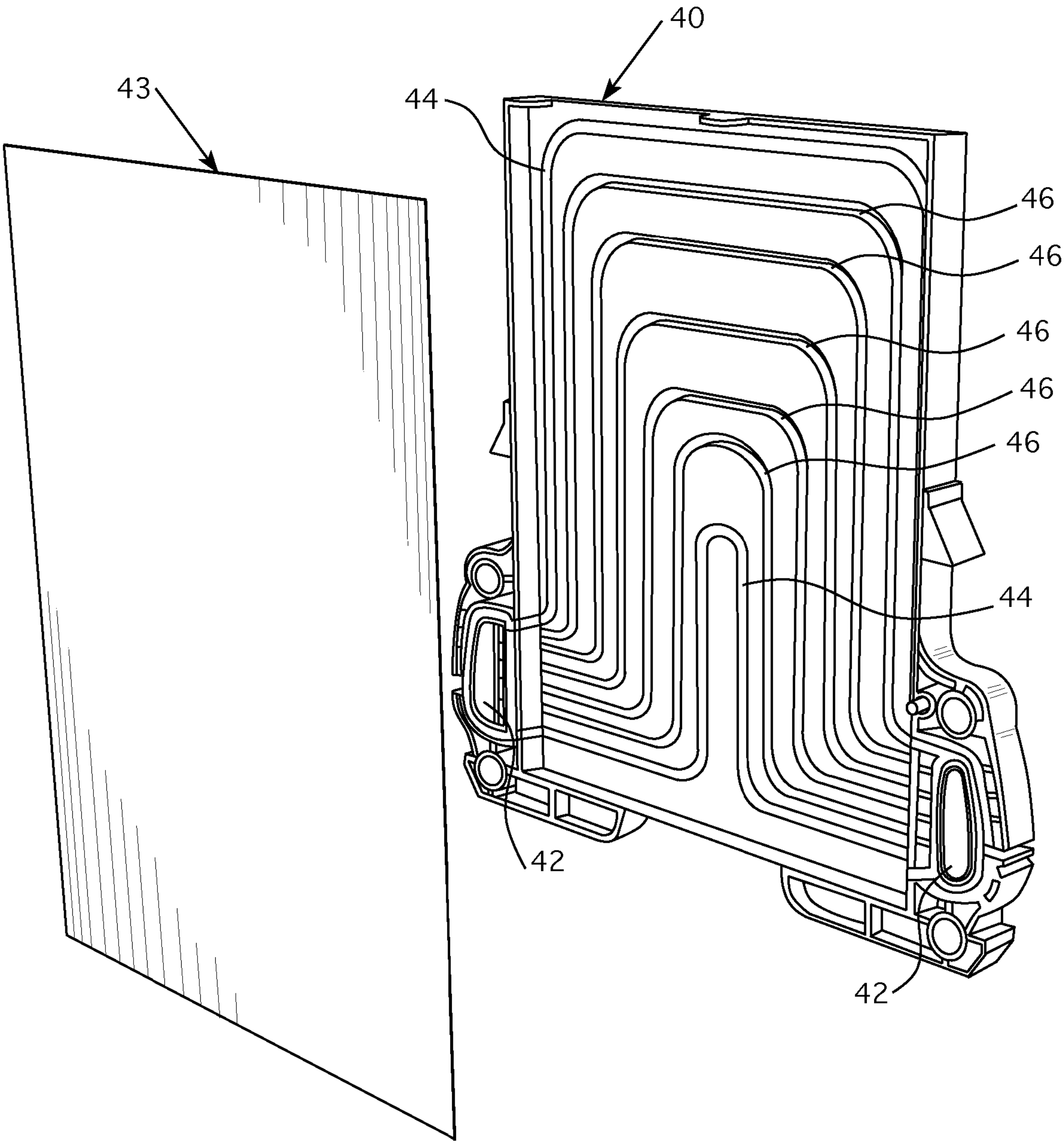


FIG. 10

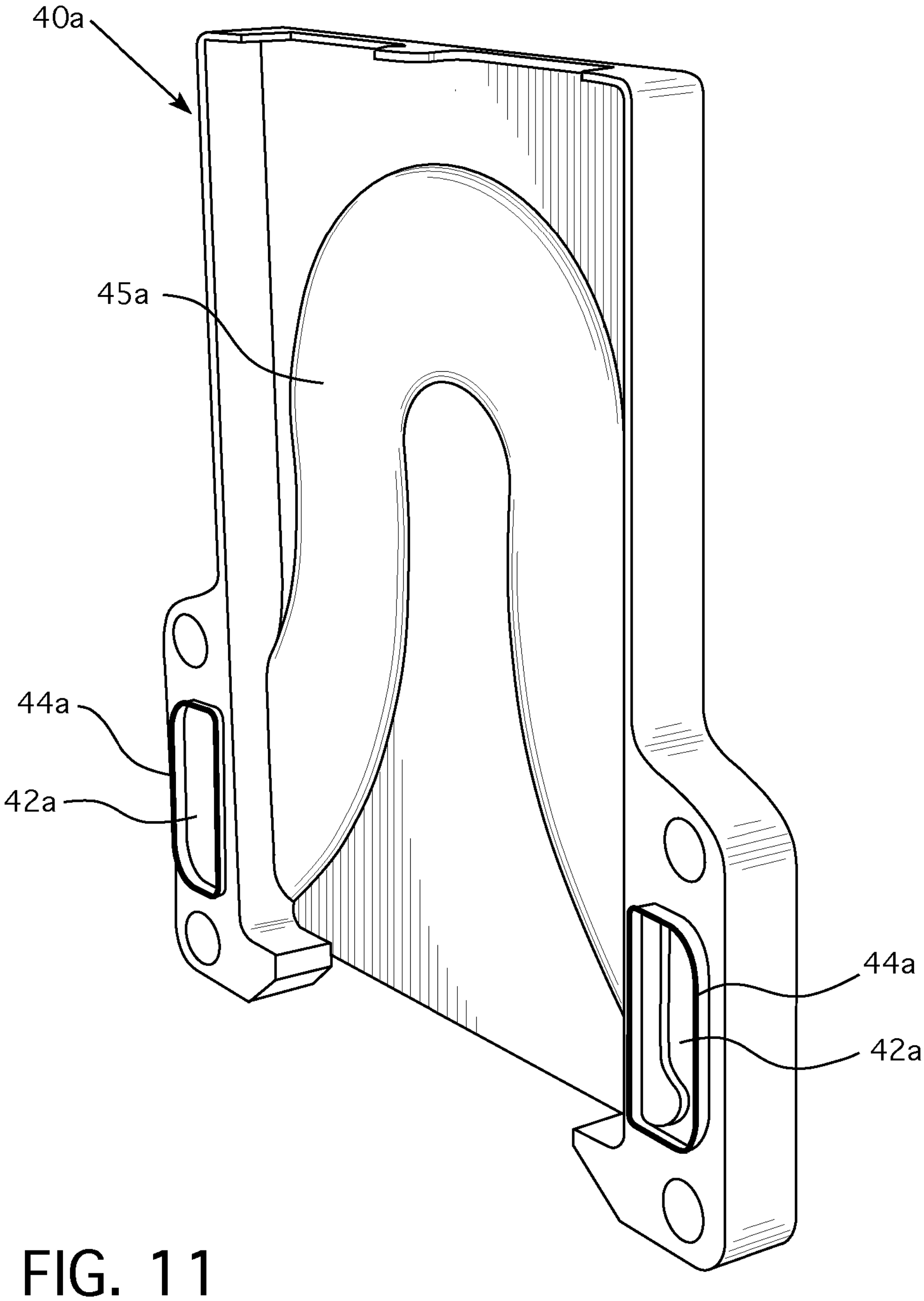


FIG. 11

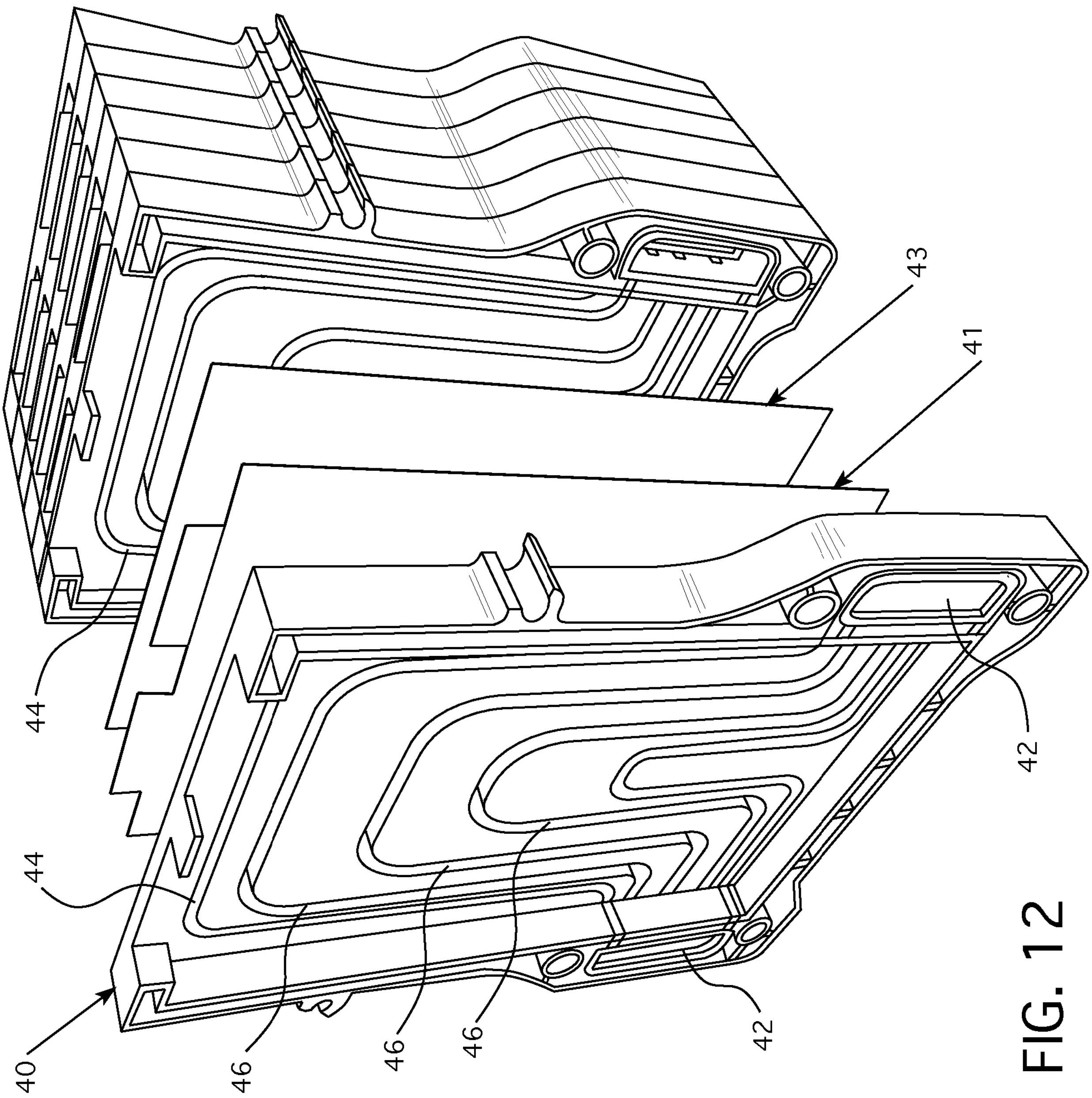


FIG. 12

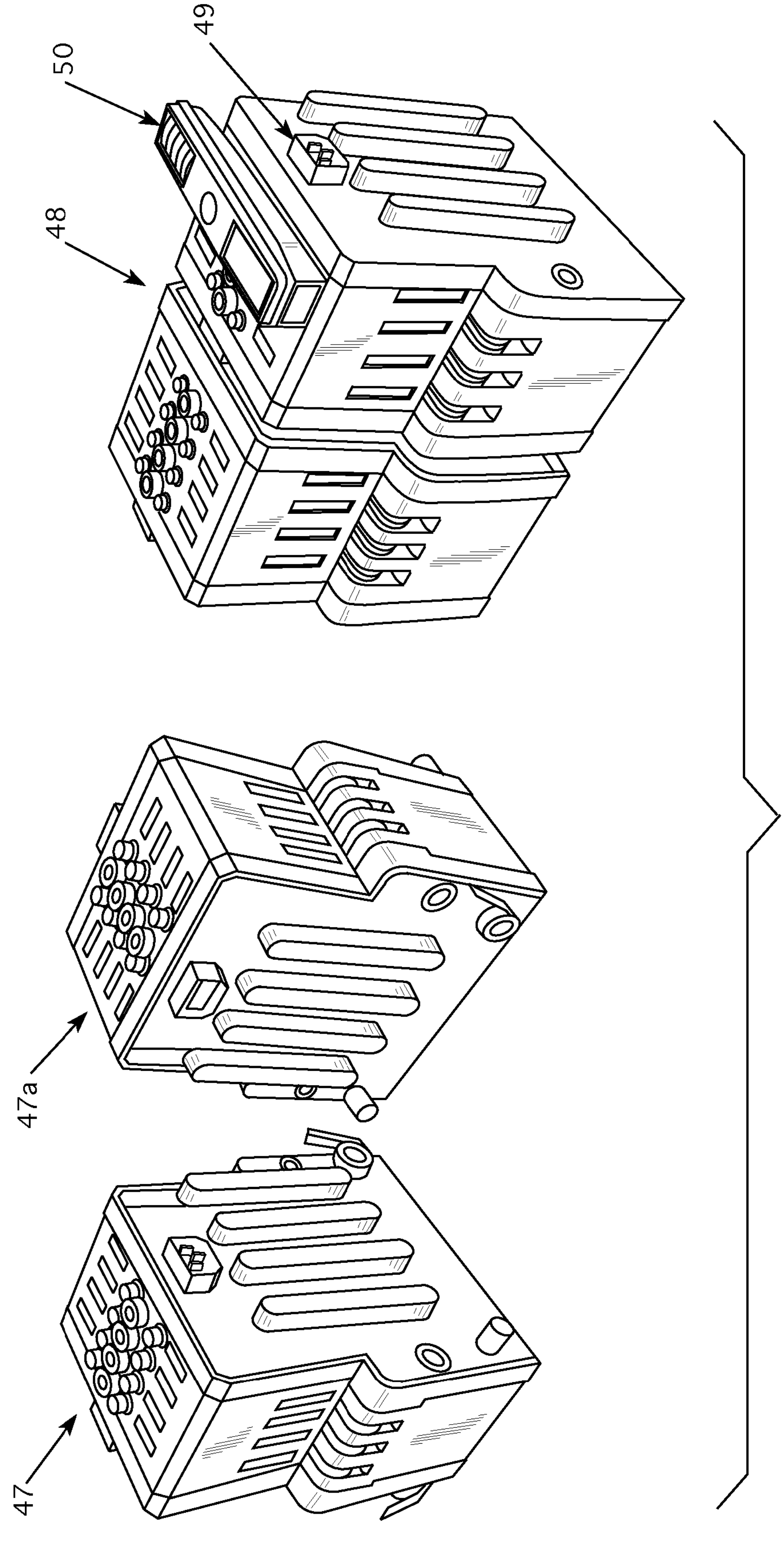


FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1030387 A
- EP 1030388 A
- DE 1495626
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- DE 2035390
- US 3644574 A
- DE 2248242
- GB 1409275 A
- DE 1694173
- US 3564077 A
- DE 2348377
- US 3919353 A
- DE 3704657
- DE 3704655
- DE 3631540
- DE 3631539
- GB 1024014 A
- DE 2521288
- DE 2421288
- EP 244857 A
- US 5807914 A
- EP 430134 A
- US 4888388 A
- US 2891920 A
- US 3294725 A
- EP 249964 A
- EP 728811 A
- DE 1961668 A
- WO 9740092 A
- DE 2407674 A
- DE 2407776 A
- DE 2715932 A
- DE 1900270 A
- US 3692744 A
- US 3671487 A
- US 3723373 A
- US 3838092 A
- US 2393967 A
- WO 2014086769 A
- WO 2014086800 A
- US 20090281216
- US 7851529 B


### Non-patent literature cited in the description


- **SCHNELL.** Chemistry and Physics of Polycarbonates. Interscience Publishers, 1964
- Methoden der Organischen Chemie. Georg Thieme-Verlag, 1961, vol. 14/1, 393-406
- **C.B. BUCKNALL.** Toughened Plastics. *Appl. Science Publishers,* 1977
- *Ullmanns, Enzyklopädie der Technischen Chemie,* 1980, vol. 19, 280
- **M. HOFFMANN ; H. KRÖMER ; R. KUHN.** *Polymeranalytik I und II, Georg Thieme-Verlag, Stuttgart,* 1977
- *Chemie in unserer,* 1987, vol. 4, 121-127
- **M. HOFFMANN ; H. KRÖMER ; R. KUHN.** Polymeranalytik. Georg Thieme-Verlag, 1977
- Kunststoff-Handbuch. Karl-Hanser-Verlag, 1973, vol. VIII, 695
- **SCHILDKNECHT.** Vinyl and Related Polymers. John Wiley & Sons, Inc, 1962, 484-494
- **WALL.** Fluorpolymers. Wiley-Interscience, John Wiley & Sons, Inc, 1970, vol. 13, 623-654
- Modern Plastics Encyclopedia. McGraw-Hill, Inc, October 1970, vol. 47, 1970-1971
- Modern Plastics Encyclopedia. McGraw-Hill, Inc, October 1975, vol. 52, 27, , 28, , 472